# EUROPÄISCHE PATENTANMELDUNG

(11) **EP 4 600 536 A2**
(43) Veröffentlichungstag der Anmeldung: **13.08.2025**
(21) Anmeldenummer: 25184952.7
(22) Anmeldetag: 08.12.2021
(51) Int. Cl.: F16L 37/098

(54) **VERBINDUNGSVORRICHTUNG ZUM VERBINDEN EINES ERSTEN LEITUNGSENDES MIT EINEM ZWEITEN LEITUNGSENDE**

(30) Priorität: 10.03.2021 DE 102021105817
(62) Teilanmeldung aus: 21836092.3
(71) Anmelder: U-Consulting GmbH, 87787 Wolfertschwenden (DE)
(72) Erfinder: UNTCH, Günter, 79410 Badenweiler (DE)
(74) Vertreter: Walther Bayer Faber Patentanwälte PartGmbB

(57) **Zusammenfassung**

Die vorliegende Erfindung betrifft eine Verbindungsvorrichtung (10) zum Verbinden eines ersten Leitungsendes (12) mit einem zweiten Leitungsende (14), wobei das erste Leitungsende (12) einen ersten Verbindungsabschnitt (94) und das zweite Leitungsende (14) einen zweiten Verbindungsabschnitt (96) aufweist und die Verbindungsvorrichtung (10) umfasst:
- einen ersten Verbindungskörper (98) mit einem ersten Gegenverbindungsabschnitt (104) und einem ersten Verriegelungsabschnitt (106),
- einen zweiten Verbindungskörper (100) mit einem zweiten Gegenverbindungsabschnitt (108), und einem zweiten Verriegelungsabschnitt (110), und
- einen Verriegelungskörper (102), wobei die Verbindung zwischen dem Verriegelungskörper (102) und dem ersten Verbindungskörper (98), und/oder dem Verriegelungskörper (102) und dem zweiten Verbindungskörper (100) lösbar ist, wobei
- der erste Verbindungsabschnitt (94) und der erste Gegenverbindungsabschnitt (104) als Triclamp-Stutzen (119) und/oder
- der zweite Verbindungsabschnitt (96) und der zweite Gegenverbindungsabschnitt (108) als Triclamp-Stutzen (119) ausgeführt sind.

## Beschreibung

Die vorliegende Erfindung betrifft eine Verbindungsvorrichtung zum Verbinden eines ersten Leitungsendes mit einem zweiten Leitungsende.

Zum Verbinden von Leitungsenden, beispielsweise von Schlauch- oder Leitungsenden untereinander oder miteinander, sind sogenannte Triclamps als standardisierte Anschlussklemmen bekannt. Unter einem Triclamp versteht man eine klappbare Anschlussklemme oder Anschlussklammer mit zwei axial beabstandeten Klemmflanschen, die leicht angeschrägt zueinander ausgerichtet sind, so dass sich zwischen ihnen ein sich nach radial innen weitender, keilförmiger Ringraum bildet. Ein solcher Triclamp eignet sich zur aseptischen Montage zweier Leitungsenden, die jeweils endständig angeordnete, flanschartige radiale Erweiterungen, auch Anlageflansche genannt, aufweisen und einander mit ihren jeweiligen Stirnflächen kontaktieren. Die Anschlussklemme wird so um die aneinander anliegenden radialen Erweiterungen geklappt, dass die Klemmflansche die jeweiligen Rückflächen der radialen Erweiterungen kontaktieren. Die zum Zusammenklappen der Anschlussklemme eingesetzte Kraft wird über die Schrägen der Klemmflansche in eine Axialkraft umgelenkt, die als Anpresskraft auf die aneinander anliegenden Stirnflächen der radialen Erweiterungen wirkt. Um die Anschlussklemme in zusammengeklapptem Zustand zu halten, sind deren freie Enden miteinander verbindbar. Üblicherweise werden hierzu Schraubverbindungen verwendet. In der US 8 328 457 B2 und in der DE 10 2016 108 905 A1 sind hierzu Rastverbindungen vorgesehen.

Nachteilig an den Triclamps ist, dass sie sich vergleichsweise schwer schließen und wieder öffnen lassen. Insbesondere dann, wenn ein Triclamp von einer einzigen Person geschlossen oder geöffnet werden soll, ist der hierzu notwendige Zeitaufwand besonders groß. Der erhöhte Zeitaufwand ist insbesondere dann von Nachteil, wenn die Leitungen, welche mit einem Triclamp miteinander verbunden werden, häufig gereinigt werden müssen, wozu der Triclamp geöffnet werden muss.

Wenn die Leitungen, die mit einem Triclamp miteinander verbunden werden, zum Transportieren von toxischen Substanzen, insbesondere in Partikelform, verwendet werden, muss gewährleistet sein, dass keine oder nur sehr kleine Mengen dieser toxischen Substanzen in die Umwelt gelangen können. Hierzu werden sogenannte Sekundärschnittstellen eingesetzt, mit denen schlauchförmige Umhüllungen üblicherweise aus einer Plastikfolie, miteinander verbunden werden und mit welchen die Triclamps umschlossen werden. In diesem Fall muss man jedoch die Triclamps im geschlossenen Zustand der Sekundärschnittstellen öffnen und schließen, was die Handhabung zusätzlich erschwert und den Zeitaufwand weiter ansteigen lässt.

Aufgabe einer Ausführungsform der vorliegenden Erfindung ist es daher, eine Verbindungsvorrichtung zum Verbinden eines ersten Leitungsendes mit einem zweiten Leitungsende vorzuschlagen, mit welchem es mit einfachen und kostengünstigen Mitteln möglich ist, ein erstes Leitungsende und ein zweites Leitungsende im Vergleich zu einem Triclamp auf einfachere und schnellere Art und Weise miteinander zu verbinden und wieder voneinander zu lösen.

Diese Aufgabe wird mit den in den Ansprüchen 1 und 12 angegebenen Merkmalen gelöst. Vorteilhafte Ausführungsformen sind Gegenstand der Unteransprüche.

Eine Ausführungsform der Erfindung betrifft eine Verbindungsvorrichtung zum Verbinden eines ersten Leitungsendes mit einem zweiten Leitungsende, wobei
- das erste Leitungsende eine flanschartige radiale erste Erweiterung mit einer ersten Stirnfläche und einer ersten Rückfläche aufweist, und
- das zweite Leitungsende eine flanschartige radiale zweite Erweiterung mit einer zweiten Stirnfläche und einer zweiten Rückfläche aufweist, und die Verbindungsvorrichtung umfasst:
- einen Auflagering, welcher mit der ersten Rückfläche zur Anlage gebracht werden kann,
- eine Sperreinrichtung, welche lösbar mit dem Auflagering verbindbar ist,
- wobei im montierten Zustand der Auflagering oder die Sperreinrichtung axial über die erste Stirnfläche übersteht und eine Aufnahmeöffnung bildet, in welche die zweite Erweiterung einbringbar ist, und
- zumindest einen Sperrkörper, der im Auflagering und/oder in der Sperreinrichtung in radialer Richtung bewegbar gelagert ist, wobei
- der Sperrkörper mittels der Sperreinrichtung zwischen einer Offenstellung, in welcher die zweite Stirnfläche mit der ersten Stirnfläche zur Anlage gebracht werden kann, und einer Schließstellung verstellbar ist, in welcher der Sperrkörper eine axial wirkende Schließkraft auf die zweite Rückfläche aufbringt, so dass die zweite Stirnfläche gegen die erste Stirnfläche gedrückt wird.

Dadurch, dass die vorschlagsgemäße Verbindungsvorrichtung einen Auflagering und eine damit verbindbare Sperreinrichtung aufweist, lässt sich die Verbindungsvorrichtung so weit vormontieren, dass nur noch das zweite Leitungsende in die Aufnahmeöffnung eingebracht und anschließend der Sperrkörper radial bewegt werden muss. Die beiden Leitungsenden lassen sich auf diese Weise im Vergleich zu der Verwendung von Triclamps deutlich einfacher miteinander verbinden und wieder voneinander lösen, so dass das Verbinden ohne weiteres auch von einer einzigen Person durchgeführt werden kann. Zudem sinkt der hierzu notwendige Zeitaufwand gegenüber der Verwendung von Triclamps deutlich. Die vorschlagsgemäße Verbindungsvorrichtung eignet sich insbesondere dann, wenn das erste Leitungsende und das zweite Leitungsende baugleich ausgeführt sind.

Nach Maßgabe einer weiteren Ausführungsform kann die Sperreinrichtung den Auflagering ringförmig umschließen. In dieser Ausführungsform kann die Sperreinrichtung ringförmig und damit rotationssymmetrisch ausgestaltet werden, wodurch die Herstellungskosten gering gehalten werden können. Zudem liegt die Sperreinrichtung vollumfänglich am Auflagering an, wodurch ein günstiger Kraftfluss zwischen dem Auflagering und der Sperreinrichtung erreicht wird.

In einer weitergebildeten Ausführungsform kann der Auflagering von zumindest zwei Ringsegmenten gebildet werden, welche lösbar miteinander verbindbar sind, wobei die Ringsegmente radial bündig mit der ersten Erweiterung abschließen oder radial nach außen über die erste Erweiterung überstehen. Für den Fall, dass zwei Ringsegmente vorgesehen werden, können diese als Halbringsegmente und damit baugleich ausgeführt werden. Die Verwendung von Ringsegmenten bietet sich insbesondere dann an, wenn die beiden zu verbindenden Leitungsenden jeweils fest mit anderen Bauteilen, beispielsweise Behältern oder Anschlüssen, verbunden sind. Infolgedessen liegt kein freies Ende vor, über welches der Auflagering auf die Leitung geschoben werden kann. In der zweiteiligen oder mehrteiligen Ausführungsform des Auflagerings ist es jedoch möglich, diesen um die betreffende erste Leitung herum anzuordnen. Insofern lässt sich in dieser Ausführungsform die Verbindungsvorrichtung auch dann verwenden, wenn die erste Leitung fest mit anderen Bauteilen verbunden ist.

Bei einer weitergebildeten Ausführungsform kann die Sperreinrichtung auf den Auflagering aufschraubbar sein. Das Aufschrauben ist ein vergleichsweise einfacher Vorgang. Zudem kann die Sperreinrichtung axial relativ zum Auflagering in die gewünschte Position gebracht werden, in welcher die Sperreinrichtung auch verbleibt, wenn die betreffende Person die Sperreinrichtung loslässt. Hierdurch werden das Verbinden und das Trennen der beiden Leitungsenden auf technisch einfache Weise vereinfacht.

Bei einer weiteren Ausführungsform kann der Sperrkörper in radialer Richtung verschiebbar in der Sperreinrichtung gelagert sein und die zweite Rückfläche eine gegenüber der zweiten Stirnfläche geneigte zweite Schrägfläche aufweisen, wobei der Sperrkörper die Schließkraft auf die zweite Schrägfläche aufbringt. Wie eingangs erwähnt, weisen viele Leitungsenden insbesondere dann, wenn sie für chemische oder biotechnologische Anwendungen verwendet werden, bereits derartige Schrägflächen auf, so dass diese mit den eingangs erwähnten Triclamps miteinander verbunden werden können, die auch mit der vorschlagsgemäßen Verbindungsvorrichtung genutzt werden. In dieser Ausführungsform lassen sich der Sperrkörper auf technisch einfache Weise lagern und dennoch die beiden Leitungsenden mit einer ausreichend großen Schließkraft gegeneinander drücken, um sie dichtend miteinander verbinden zu können.

Eine weitergebildete Ausführungsform kann sich dadurch auszeichnen, dass die Sperreinrichtung
- einen ersten Ring, welcher lösbar mit dem Auflagering verbindbar ist, und
- einen zweiten Ring umfasst, welcher drehbar und axial fixiert mit dem ersten Ring verbunden ist, wobei der zweite Ring mit einer Stellfläche mit dem Sperrkörper zusammenwirkt und die Stellfläche einen sich ändernden Abstand zur oder entlang der Drehachse des zweiten Rings aufweist.

Die Stellfläche kann entweder einen sich ändernden Abstand zur Drehachse des zweiten Rings oder eine sich ändernden Abstand entlang der Drehachse des zweiten Rings aufweisen.

Für den Fall, dass die Stellfläche einen sich ändernden Abstand zur Drehachse des zweiten Rings aufweist, lässt sich der Sperrkörper durch eine Drehbewegung des zweiten Rings mehr oder weniger weit radial nach innen und umgekehrt verschieben. Da jedoch der zweite Ring beim Drehen axial nicht bewegt wird, kann die Verbindungsvorrichtung gemäß dieser Ausführungsform auch dann eingesetzt werden, wenn axial sehr wenig Bauraum um die Verbindungsvorrichtung herum vorhanden ist. In dieser Ausführungsform bietet es sich an, den ersten Ring verdrehsicher mit dem Auflagering zu verbinden.

Für den Fall, dass die Stellfläche einen sich ändernden Abstand entlang der Drehachse des zweiten Rings aufweist, lässt sich der Sperrkörper durch eine axiale Bewegung des zweiten Rings mehr oder weniger weit radial nach innen und umgekehrt verschieben.

Nach Maßgabe einer weiteren Ausführungsform kann der Sperrkörper mit einem ersten Vorspannmittel gegen die Stellfläche vorgespannt sein. Dadurch, dass der Sperrkörper gegen die Stellfläche vorgespannt ist, wird sichergestellt, dass die Stellfläche immer mit dem Sperrkörper in Kontakt bleibt. Insbesondere wird hierdurch sichergestellt, dass sich zum Lösen der beiden Leitungsenden voneinander der Sperrkörper radial nach außen verschiebt.

Bei einer weiteren Ausführungsform kann es sich anbieten, dass der Sperrkörper mit einem zweiten Vorspannmittel radial nach innen vorgespannt ist. Für den Fall, dass der Sperrkörper sowohl mit dem ersten Vorspannmittel als auch mit dem zweiten Vorspannmittel vorgespannt ist, ist die Vorspannkraft des zweiten Vorspannmittels geringer gewählt als die des ersten Vorspannmittels. Somit wird nach wie vor sichergestellt, dass der Sperrkörper an der Stellfläche anliegt. Es kann aber auch eine Drehstellung des zweiten Rings vorgesehen sein, in welcher der Sperrkörper nicht an der Stellfläche anliegt und daher um ein bestimmtes Maß radial nach außen gegen die Vorspannkraft des zweiten Vorspannmittels bewegt werden kann. Hierdurch lässt sich das zweite Leitungsende vorfixieren, so dass die betreffende Person ihre Hände von dem zweiten Leitungsende nehmen kann. Erst anschließend wird durch Drehen des zweiten Rings der Sperrkörper in Kontakt mit der Stellfläche gebracht und radial nach innen verschoben. Das Verbinden und das Lösen der Leitungsenden wird hierdurch weiter vereinfacht.

Eine weitere Ausführungsform gibt vor, dass
- der Sperrkörper in radialer Richtung verschiebbar im Auflagering gelagert ist und
- die zweite Rückfläche eine gegenüber der zweiten Stirnfläche geneigte zweite Schrägfläche aufweist, wobei der Sperrkörper die Schließkraft auf die zweite Schrägfläche aufbringt, wobei
- die Sperreinrichtung einen Stellring umfasst, welcher drehbar und axial fixiert mit dem Auflagering verbunden ist, wobei der Stellring mit einer Stellfläche mit dem Sperrkörper zusammenwirkt und die Stellfläche einen sich ändernden Abstand zur oder entlang der Drehachse des Stellrings aufweist.

In dieser Ausführungsform kann der Sperrkörper als ein Sperr-Nutenstein ausgestaltet und in einer entsprechend komplementär geformten Nut radial verschiebbar im Auflagering gelagert sein. Um die Anzahl der Bauteile der Verschlussvorrichtung gering zu halten, ist der Auflagering einteilig ausgeführt. Es kann aber beispielsweise aus fertigungstechnischen und montagetechnischen Gründen vorteilhaft sein, den Auflagering mehrteilig auszuführen. Infolge eines Drehens des Stellrings um seine Drehachse, die mit der bereits erwähnten Längsachse zusammenfällt, wird der Sperrkörper aufgrund des sich ändernden Abstands der Stellfläche zur Drehachse radial verschoben. Aufgrund der Neigung der zweiten Schrägfläche wird bei einer radial einwärts gerichteten Bewegung des Sperrkörpers das zweite Leitungsende gegen das erste Leitungsende gedrückt, wodurch das erste Leitungsende mit dem zweiten Leitungsende verbunden wird. Zum Lösen der Leitungsenden voneinander wird der Stellring in die entgegengesetzte Richtung gedreht. Zwar kann der Sperrkörper mit einem Vorspannmittel radial nach außen vorgespannt sein, so dass aufgrund des sich dann vergrößernden Abstands der Stellfläche zur Drehachse der Sperrkörper radial nach außen bewegt wird. Um jedoch das Vorspannmittel einzusparen, kann die Stellfläche nach Art eines Keils einen komplementär geformten Abschnitt des Sperrkörpers hintergreifen und so eine radial nach außen gerichtete Kraft auf den Sperrkörper ausüben.

In einer weitergebildeten Ausführungsform kann der zweite Ring mittels eines Griffstücks manuell drehbar sein. Das Griffstück kann beispielsweise als ein Handrad oder als ein Hebel ausgestaltet sein, so dass die betreffende Person auf angenehme Weise den zweiten Ring drehen kann, ohne dass die Person eine übermäßig große Kraft aufwenden muss, damit die Verbindungsvorrichtung eine ausreichend große Schließkraft bereitstellen kann.

Bei einer weitergebildeten Ausführungsform kann der zweite Ring mittels einer Antriebseinheit drehbar sein. Als Antriebseinheit kann beispielsweise ein Hydraulikzylinder oder Pneumatikzylinder oder ein Elektroantrieb verwendet werden. Das Verbinden und das Lösen können hiermit automatisiert und folglich vereinfacht werden. Zudem ist es möglich, das Verbinden und das Lösen weitgehend automatisiert zu dokumentieren. Darüber hinaus kann die Antriebseinheit so angesteuert werden, dass ein bestimmtes Anzugsmoment und folglich eine entsprechende Schließkraft bereitgestellt werden. Somit kann sichergestellt werden, dass die beiden Leitungsenden weder zu stark noch zu schwach aneinander gedrückt werden.

Eine Ausbildung der Erfindung betrifft eine Verbindungsvorrichtung zum Verbinden eines ersten Leitungsendes mit einem zweiten Leitungsende, wobei
- das erste Leitungsende eine flanschartige radiale erste Erweiterung mit einer ersten Stirnfläche und einer ersten Rückfläche aufweist, und
- das zweite Leitungsende eine Mehrzahl von flanschartigen radialen zweiten Erweiterungen mit jeweils einer zweiten Stirnfläche und einer zweiten Rückfläche aufweist, wobei die zweiten Erweiterungen mit Unterbrechungsabschnitten voneinander getrennt sind, und die Verbindungsvorrichtung
- einen Verbindungsring mit einer radial umlaufenden ersten Verschlussfläche und einer Mehrzahl von zweiten Verschlussflächen umfasst, welche mit Durchtrittsabschnitten voneinander getrennt sind, wobei
- die erste Verschlussfläche mit der ersten Rückfläche zur Anlage gebracht werden kann, und
- die zweiten Verschlussflächen mit den zweiten Rückflächen dadurch zur Anlage gebracht werden können, dass die zweiten Erweiterungen mit einer axialen Bewegung durch die Durchtrittsabschnitte geführt und anschließend gedreht werden.

Der Verschlussring ist an der ersten Verschlussfläche so gestaltet, dass er mit der ersten Rückfläche großflächig zur Anlage gebracht werden kann, während der Verschlussring eine Anzahl von zweiten Verschlussflächen aufweist, um eine bajonettartige Verbindung mit den zweiten Erweiterungen des zweiten Leitungsendes bereitzustellen. In dieser Ausbildung der Verbindungsvorrichtung kann die erste Erweiterung normgerecht nach Art eines Anlageflansches ausgestaltet sein, wie sie bei der Verwendung von handelsüblichen Triclamps benötigt wird, während das zweite Leitungsende bajonettartig ausgestaltet ist. Zum Verbinden und Lösen der beiden Leitungsenden sind folglich nur eine axiale Bewegung gefolgt von einer rotatorischen Bewegung notwendig, so dass das Verbinden und Lösen auf sehr einfache und schnelle Weise erfolgen kann.

Bei einer weiteren Ausbildung kann vorgesehen sein, dass der Verbindungsring von zwei oder mehreren Ringsegmenten gebildet wird. Für den Fall, dass zwei Ringsegmente vorgesehen werden, können diese als Halbringsegmente und damit baugleich ausgeführt werden. Auch dann, wenn mehr als zwei Ringsegmente vorgesehen sind, können diese baugleich ausgestaltet sein. Die Verwendung von Ringsegmenten bietet sich insbesondere dann an, wenn die beiden zu verbindenden Leitungsenden jeweils fest mit anderen Bauteilen, beispielsweise Behältern oder Anschlüssen, verbunden sind. Infolgedessen ist kein freies Ende vorhanden, über welches der Verbindungsring auf die mit dem ersten Leitungsende verbundene Leitung geschoben werden könnte. In der zweiteiligen oder mehrteiligen Ausführungsform des Verbindungsrings ist es jedoch möglich, diesen um die betreffende erste Leitung herum anzuordnen.

Eine fortentwickelte Ausbildung kann vorgeben, dass die Ringsegmente mittels eines Kabelbinders miteinander verbindbar sind. Kabelbinder stellen ein Massenartikel dar, die kostengünstig zu beziehen sind. Zudem sind Kabelbinder sehr einfach zu bedienen und zuverlässig in ihrer Funktion.

Nach Maßgabe einer fortentwickelten Ausbildung können die zweiten Verschlussflächen und/oder die zweiten Rückflächen in Umfangsrichtung geneigt sein. Aufgrund der Neigung der zweiten Verschlussflächen und/oder der zweiten Rückflächen wird beim Drehen des zweiten Leitungsendes seine Drehbewegung auch in eine axiale Bewegung umgesetzt, so dass das zweite Leitungsende auf das erste Leitungsende zu bewegt wird, wodurch ein gewisser Anpressdruck zwischen den beiden Leitungsenden bereitgestellt wird und diese dichtend miteinander verbunden werden können.

Bei einer weiteren Ausbildung kann vorgesehen sein, dass die Verbindungsvorrichtung eine Sekundärschnittstelle umfasst, welche den Verbindungsring radial beabstandet umschließt. Mit einer Sekundärschnittstelle können schlauchförmige Umhüllungen miteinander verbunden werden, mit denen die beiden Leitungsenden umschlossen werden können. Hierdurch wird die Wahrscheinlichkeit, dass insbesondere toxische Substanzen in die Umwelt gelangen, deutlich reduziert.

Eine Ausgestaltung der vorliegenden Erfindung betrifft eine Verbindungsvorrichtung zum Verbinden eines ersten Leitungsendes mit einem zweiten Leitungsende, wobei
- das erste Leitungsende einen ersten Verbindungsabschnitt aufweist und
- das zweite Leitungsende einen zweiten Verbindungsabschnitt aufweist, und die Verbindungsvorrichtung umfasst:
- einen ersten Verbindungskörper mit
   o einem ersten Gegenverbindungsabschnitt, wobei der erste Verbindungskörper unter Verwendung des ersten Verbindungsabschnitts und des ersten Gegenverbindungsabschnitts mit dem ersten Leitungsende verbindbar oder verbunden ist, und
   o einem ersten Verriegelungsabschnitt,
- einen zweiten Verbindungskörper mit
   o einem zweiten Gegenverbindungsabschnitt, wobei der zweite Verbindungskörper unter Verwendung des zweiten Verbindungsabschnitts und des zweiten Gegenverbindungsabschnitts mit dem zweiten Leitungsende verbindbar oder verbunden ist, und
   o einem zweiten Verriegelungsabschnitt,
- einen Verriegelungskörper, der
   o eine Längsachse definiert und mit
   o einem ersten Gegenverriegelungsabschnitt, mit welchem der Verriegelungskörper unter Verwendung des ersten Verriegelungsabschnitts mit dem ersten Verbindungskörper mittels einer translatorischen Bewegung entlang der Längsachse und/oder einer rotatorischen Bewegung um die Längsachse verbindbar ist, und mit
   o einem zweiten Gegenverriegelungsabschnitt, mit welchem der Verriegelungskörper unter Verwendung des zweiten Verriegelungsabschnitts mit dem zweiten Verbindungskörper mittels einer translatorischen Bewegung entlang der Längsachse und/oder einer rotatorischen Bewegung um die Längsachse verbindbar ist, wobei
- die Verbindung zwischen
   o dem Verriegelungskörper und dem ersten Verbindungskörper, und/oder dem Verriegelungskörper und dem zweiten Verbindungskörper lösbar ist.

Der erste Verbindungsabschnitt des ersten Leitungsendes und/oder der zweite Verbindungsabschnitt des zweiten Leitungsendes können beliebig ausgestaltet sein. Der erste Verbindungskörper und der zweite Verbindungskörper weisen einen ersten Gegenverbindungsabschnitt bzw. einen zweiten Gegenverbindungsabschnitt auf, welche komplementär zum ersten Verbindungsabschnitt bzw. zum zweiten Gegenverbindungsabschnitt ausgestaltet sind. Am gegenüberliegenden Ende sind der erst Verbindungskörper und der zweite Verbindungskörper mit einem ersten Verriegelungsabschnitt bzw. zweiten Verriegelungsabschnitt versehen. Der Verriegelungskörper weist beim Verbinden und im verbundenen Zustand einen mit dem ersten Verriegelungsabschnitt zusammenwirkenden ersten Gegenverriegelungsabschnitt und einen mit dem zweiten Verriegelungsabschnitt zusammenwirkenden zweiten Gegenverriegelungsabschnitt auf. Der erste Verriegelungsabschnitt und der erste Gegenverriegelungsabschnitt sowie der zweite Verriegelungsabschnitt und der zweite Gegenverriegelungsabschnitt sind so ausgeführt, dass eine Verbindung zwischen dem Verriegelungskörper sowie dem ersten Verbindungskörper und dem zweiten Verbindungskörper mittels einer translatorischen Relativbewegung entlang der Längsachse und/oder einer rotatorischen Relativbewegung um die Längsachse hergestellt werden kann. Die Relativbewegung bezieht sich auf den Verriegelungskörper sowie den ersten Verbindungskörper und/oder den zweiten Verbindungskörper. Beispielsweise kann die Verbindung zwischen dem ersten Verbindungskörper und dem Verriegelungskörper ausschließlich mittels einer translatorischen Relativbewegung zwischen dem Verbindungskörper und dem Verriegelungskörper hergestellt werden. Weitere Bewegungen sind in diesem Fall nicht notwendig. Insbesondere müssen keine weiteren Verbindungsmittel geöffnet oder geschlossen werden.

Es ist nicht notwendig, dass sowohl die Verbindung zwischen dem Verriegelungskörper und dem ersten Verbindungskörper als auch die Verbindung zwischen dem Verriegelungskörper und dem zweiten Verbindungskörper lösbar sind. Es genügt, wenn eine der beiden Verbindungen lösbar ist.

Die Verbindung zwischen dem ersten Leitungsende und dem ersten Verbindungskörper sowie zwischen dem zweiten Leitungsende und dem zweiten Verbindungskörper können einmalig hergestellt und dauerhaft erhalten bleiben. Das Verbinden und Trennen geschieht in diesem Fall ausschließlich unter Verwendung des Verriegelungskörpers. Aufgrund dieser Gestaltung lassen sich zwei Leitungsenden auf einfache Weise miteinander verbinden. Es soll an dieser Stelle betont werden, dass mit der Verbindungsvorrichtung gemäß der vorliegenden Ausgestaltung auch Leitungsenden miteinander verbunden werden können, deren Verbindungsabschnitte nicht zueinander passen oder nicht komplementär zueinander ausgebildet sind.

Eine weitere Ausgestaltung zeichnet sich dadurch aus, dass
- der erste Gegenverriegelungsabschnitt radial zur Längsachse bewegbare Haken und
- der erste Verriegelungsabschnitt erste Verschlussflächen oder umgekehrt aufweisen, wobei
- aufgrund einer translatorischen Relativbewegung entlang der Längsachse die Haken zunächst im Verriegelungsabschnitt radial zur Längsachse nach außen bewegt werden und anschließend die ersten Verschlussflächen hintergreifen.

Zum Ausbilden einer Verbindung werden der Verriegelungskörper und der erste Verbindungskörper zunächst in etwa koaxial zueinander ausgerichtet und anschließend entlang der Längsachse aufeinander zu bewegt. Weitere Schritte sind nicht notwendig. Im verbundenen Zustand hintergreifen die Haken die ersten Verschlussflächen, so dass eine formschlüssige Verbindung geschaffen wird. Je nach Ausgestaltung der beispielsweise in etwa ringförmigen, unterbrechungsfrei umlaufenden Verschlussflächen und der Haken kann diese Verbindung unlösbar sein. Die Verschlussflächen können aber auch unterbrochen sein. Folglich kann die formschlüssige Verbindung in einer bestimmten Drehstellung aufgehoben werden.

Der zweite Verriegelungsabschnitt und der zweite Gegenverriegelungsabschnitt können ebenfalls entsprechend ausgebildet sein.

Gemäß einer fortgebildeten Ausgestaltung weist der Verriegelungskörper radial zur Längsachse nach außen vorspringende Auswölbungen auf, wobei die Haken von den Auswölbungen umschlossen werden. Dabei sind die Haken innerhalb des von den Auswölbungen umschlossenen Raums angeordnet. Die Haken können vor äußeren Einflüssen geschützt werden. Ferner können die Auswölbungen eine radiale maximale Auslenkung der Haken definieren, um eine irreversibel plastische Verformung zu vermeiden. Für den Fall, dass zum Ausbilden oder Lösen der Verbindung zwischen dem Verriegelungskörper und dem ersten Verbindungskörper und/oder dem zweiten Verbindungskörper der Verriegelungskörper gedreht werden muss, erleichtern die Auswölbungen das Drehen, da der Benutzer eine Angriffsfläche hat.

Eine fortentwickelte Ausgestaltung gibt vor, dass
- der zweite Gegenverriegelungsabschnitt Ausnehmungen mit einem Einbringbereich und einem Verriegelungsbereich und
- der zweite Verriegelungsabschnitt zweite Verriegelungsfortsätze oder umgekehrt aufweisen, wobei
- aufgrund einer translatorischen Bewegung entlang der Längsachse die Verriegelungsfortsätze zunächst in den Einbringbereich und anschließend aufgrund einer rotatorischen Bewegung um die Längsachse in den Verriegelungsbereich einbringbar sind.

In dieser Ausgestaltung wird die Verbindung zwischen dem Verriegelungskörper und dem zweiten Verbindungskörper nach Art eines Bajonettverschlusses hergestellt, welche üblicherweise lösbar ist. Wenn die Verbindung zwischen dem Verriegelungskörper und dem ersten Verbindungskörper mit den bereits erwähnten Haken hergestellt werden kann, kann diese Verbindung unlösbar sein, was im Vergleich zu einer lösbaren Verbindung konstruktiv einfacher ist. Da zwei unterschiedliche Bewegungen zum Ausbilden der Verbindung zwischen dem ersten Verbindungskörper und dem Verriegelungskörper sowie zwischen dem zweiten Verbindungskörper und dem Verriegelungskörper ausgeführt werden müssen, wird eine klare Abfolge vorgegeben und die Wahrscheinlichkeit von Fehlbedienungen reduziert.

In einer weiteren Ausgestaltung sind der erste Verbindungskörper und/oder der zweite Verbindungskörper trichterförmig ausgebildet. Mit der trichterförmigen Ausgestaltung können Durchmesserunterschiede zwischen den Leitungsenden ausgeglichen werden. Zudem gestaltet sich das Entleeren beispielsweise eines Behälters, der das erste oder das zweite Leitungsende bildet, infolge der trichterförmigen Ausgestaltung einfacher.

Nach einer weitergebildeten Ausgestaltung sind
- der erste Verbindungsabschnitt und der erste Gegenverbindungsabschnitt als Triclamp-Stutzen und/oder
- der zweite Verbindungsabschnitt und der zweite Gegenverbindungsabschnitt als Triclamp-Stutzen ausgeführt.

Dabei sind die Triclamp-Stutzen insbesondere als Standard-Triclamp-Stutzen ausgeführt. Standard-Triclamp-Stutzen sind beispielsweise in der ISO 2852 1993-06 (herausgegeben im Juni 1993, inzwischen zurückgezogen) oder der DIN 31676 in der zum Prioritätsdatum gültigen Fassung genormt. Die Standard-Triclamp-Stutzen werden insbesondere in biotechnologischen und pharmazeutischen Anwendungen häufig eingesetzt. In dieser Ausbildung kann die Verbindungsvorrichtung für eine hohe Zahl an Leitungsenden verwendet werden.

Gemäß einer weiterentwickelten Ausgestaltung
- ist am ersten Gegenverbindungsabschnitt ein erster Adapter zum Ausbilden der Verbindung mit dem ersten Verbindungsabschnitt anschließbar und/oder
- ist am zweiten Gegenverbindungsabschnitt ein zweiter Adapter zum Ausbilden einer Verbindung mit dem zweiten Verbindungsabschnitt anschließbar.

Die Adapter können im einfachsten Fall als Verlängerung der Verbindungsvorrichtung eingesetzt werden, wenn dies aus notwendig sein sollte. Der Adapter kann aber auch dann eingesetzt werden, wenn die zu verbindenden Leitungsenden unterschiedliche Durchmesser aufweisen oder zumindest eines der Leitungsenden einen speziellen, nicht komplementär zum ersten Verbindungsabschnitt oder zweiten Verbindungsabschnitt ausgebildeten Verbindungsabschnitt aufweist. Beispielsweise dann, wenn das zweite Leitungsende von einem Behälter mit einem Schraubverschluss gebildet wird, bietet es sich an, einen Adapter einzusetzen.

Eine weitere Ausgestaltung gibt vor, dass
- der erste Verbindungskörper einen ersten Aufnahmeabschnitt zum Aufnehmen einer ersten schlauchförmigen Umhüllung aufweist und/oder
- der zweite erste Verbindungskörper einen zweiten Aufnahmeabschnitt zum Aufnehmen einer zweiten schlauchförmigen Umhüllung aufweist.

Die schlauchförmigen Umhüllungen können zum Ausbilden einer Sekundärschnittstelle verwendet werden, wozu sie miteinander verbunden werden. Mit der Sekundärschnittstelle werden die beiden Leitungsenden umschlossen. Hierdurch wird die Wahrscheinlichkeit, dass insbesondere toxische Substanzen in die Umwelt gelangen, deutlich reduziert.

Eine Umsetzung der vorliegenden Erfindung betrifft die Verwendung der Verbindungsvorrichtung nach einem der zuvor beschriebenen Ausführungsformen und Ausbildungen bei der Herstellung und beim Transport von biotechnologischen und pharmazeutischen Produkten. Die Vorteile und die technischen Effekte, die für die Verbindungsvorrichtung beschrieben worden sind, lassen sich gleichermaßen mit der Verwendung erzielen. Dabei bietet es sich an, die Verbindungsvorrichtung zum Verbinden von zwei baugleich ausgebildeten Leitungsenden zu verwenden. Insbesondere dann, wenn die Verbindungsvorrichtung mit einer Sekundärschnittstelle betrieben wird, eignet sich die Verbindungsvorrichtung auch für die Verbindung von Leitungsenden, durch welche toxische Substanzen durchgeleitet werden. In vielen Fällen handelt es sich dabei um partikelförmige Substanzen, wobei die Substanzen auch im flüssigen oder gasförmigen Zustand durch die Leitungsenden geführt werden können.

Beispielhafte Ausführungsformen der Erfindung werden im Folgenden unter Bezugnahme auf die beigefügten Zeichnungen näher erläutert. Es zeigen
- Figur 1A: ein erstes Ausführungsbeispiel einer erfindungsgemäßen Verbindungsvorrichtung zum Verbinden eines ersten Leitungsendes mit einem zweiten Leitungsende, wobei die Leitungsenden vorpositioniert sind,
- Figur 1B: das in Figur 1A dargestellte erste Ausführungsbeispiel der Verbindungsvorrichtung, bei welchem die Leitungsenden miteinander verbunden sind,
- Figur 2A: ein zweites Ausführungsbeispiel der erfindungsgemäßen Verbindungsvorrichtung zum Verbinden eines ersten Leitungsendes mit einem zweiten Leitungsende,
- Figur 2B: das in Figur 2A dargestellte zweite Ausführungsbeispiel der Verbindungsvorrichtung, bei welchem die Leitungsenden vorpositioniert sind,
- Figur 2C: das in Figur 2A dargestellte zweite Ausführungsbeispiel der Verbindungsvorrichtung, bei welchem die Leitungsenden miteinander verbunden sind, jeweils anhand von prinzipiellen Schnittdarstellungen,
- Figur 3A: ein drittes Ausführungsbeispiel der erfindungsgemäßen Verbindungsvorrichtung zum Verbinden eines ersten Leitungsendes mit einem zweiten Leitungsende, bei welchem die Leitungsenden vorpositioniert sind,
- Figur 3B: das in Figur 3A dargestellte dritte Ausführungsbeispiel, bei welchem die Leitungsenden miteinander verbunden sind,
- Figur 4A: ein viertes Ausführungsbeispiel der erfindungsgemäßen Verbindungsvorrichtung zum Verbinden eines ersten Leitungsendes mit einem zweiten Leitungsende, bei welchem die Leitungsenden vorpositioniert sind,
- Figur 4B: das in Figur 3A dargestellte vierte Ausführungsbeispiel, bei welchem die Leitungsenden miteinander verbunden sind,
- Figur 4C: eine Schnittdarstellung eines achten Ausführungsbeispiels entlang einer in Figur 4D definierten Schnittebene, bei welchem die Leitungsenden vorpositioniert sind,
- Figur 4D: eine Schnittdarstellung eines achten Ausführungsbeispiels der Verbindungsvorrichtung, bei welcher die Leitungsenden vorpositioniert sind,
- Figur 4E: eine Schnittdarstellung des achten Ausführungsbeispiels entlang einer in Figur 4F definierten Schnittebene, bei welchem die Leitungsenden miteinander verbunden sind,
- Figur 4F: eine Schnittdarstellung eines achten Ausführungsbeispiels der Verbindungsvorrichtung, bei welcher die Leitungsenden miteinander verbunden sind,
- Figur 5: eine prinzipiele Draufsicht auf das zweite Ausführungsbeispiel der Verbindungsvorrichtung,
- Figur 6A: ein erstes Leitungsende und ein fünftes Ausführungsbeispiel der Verbindungsvorrichtung in einem Ausgangszustand,
- Figur 6B: das in Figur 6A gezeigte fünfte Ausführungsbeispiel in einem Zwischenzustand, in welchem die Verbindungsvorrichtung mit dem ersten Leitungsende verbunden ist,
- Figur 6C: ein zweites Leitungsende, welches mit der Verbindungsvorrichtung nach dem fünften Ausführungsbeispiel mit einem ersten Leitungsende verbindbar ist,
- Figur 6D: das in Figur 6C gezeigte zweites Leitungsende, welches mit der Verbindungsvorrichtung nach dem fünften Ausführungsbeispiel mit einem ersten Leitungsende verbunden ist,
- Figur 6E: ein weiteres zweites Leitungsende, welches mit der Verbindungsvorrichtung nach dem fünften Ausführungsbeispiel mit einem ersten Leitungsende verbindbar ist,
- Figur 6F: das in Figur 6E gezeigte weitere zweites Leitungsende, welches mit der Verbindungsvorrichtung nach dem fünften Ausführungsbeispiel mit einem ersten Leitungsende verbunden ist,
- Figur 6G: das in Figur 6D gezeigte zweites Leitungsende, welches mit der Verbindungsvorrichtung nach dem fünften Ausführungsbeispiel mit einem ersten Leitungsende verbunden ist, wobei die Verbindungsvorrichtung von einer Sekundärschnittstelle umschlossen ist,
- Figur 7: eine prinzipielle Darstellung einer Verbindungsvorrichtung nach einem sechsten Ausführungsbeispiel,
- Figuren 8A bis 8F: verschiedene Ansichten einer Verbindungsvorrichtung nach dem sechsten Ausführungsbeispiel, und
- Figuren 9A und 9B: verschiedene Ansichten einer Verbindungsvorrichtung nach einem siebten Ausführungsbeispiel.

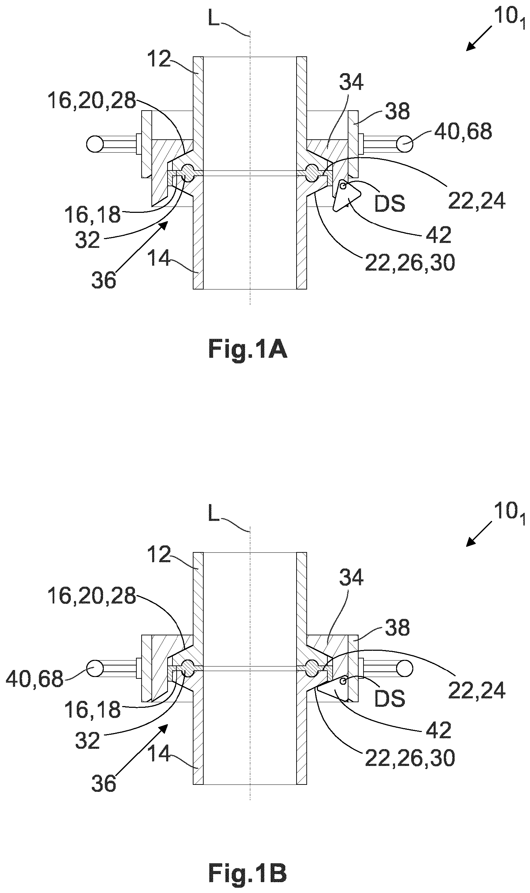

In Figur 1A ist ein erstes Ausführungsbeispiel einer erfindungsgemäßen Verbindungsvorrichtung 10₁ zum Verbinden eines ersten Leitungsendes 12 mit einem zweiten Leitungsende 14 anhand einer prinzipiellen Schnittdarstellung gezeigt. Das erste Leitungsende 12 kann beispielsweise das Ende einer Rohrleitung oder eines Schlauches sein. Entsprechendes gilt für das zweite Leitungsende 14. Die Rohrleitungen oder die Schläuche können mit einem Behälter oder einem Anschluss, beispielsweise einem Versorgungsanschluss, verbunden sein (nicht dargestellt).

Das erste Leitungsende 12 weist eine flanschartige radiale erste Erweiterung 16 mit einer ersten Stirnfläche 18 und einer ersten Rückfläche 20 auf. Das zweite Leitungsende 14 ist entsprechend aufgebaut und umfasst folglich eine flanschartige radiale zweite Erweiterung 22 mit einer zweiten Stirnfläche 24 und einer zweiten Rückfläche 26. Man erkennt, dass die erste Rückfläche 20 und die zweite Rückfläche 26 gegenüber der ersten Stirnfläche 18 bzw. zweiten Stirnfläche 24 geneigt sind, so dass das erste Leitungsende 12 eine erste Schrägfläche 28 und das zweite Leitungsende 14 eine zweite Schrägfläche 30 umfassen. Zudem ist erkennbar, dass ein Dichtelement 32 in diesem Fall mit dem zweiten Leitungsende 14 befestigt ist, wobei eine Befestigung am ersten Leitungsende 12 ebenfalls möglich ist. Das erste Leitungsende 12 und das zweite Leitungsende 14 sind so ausgestaltet, dass sie mit einem handelsüblichen Triclamp miteinander verbunden werden können.

Die Verbindungsvorrichtung 10₁ weist einen Auflagering 34 auf, welcher mit der ersten Rückfläche 20 zur Anlage gebracht werden kann. Dabei kann der Auflagering 34 nach Art eines Spannsatzes ausgebildet sein, so dass der Auflagering 34 axial und verdrehsicher am ersten Leitungsende 12 fixiert werden kann. Wie erwähnt, ist die erste Rückfläche 20 als die erste Schrägfläche 28 ausgestaltet, so dass der Auflagering 34 ebenfalls eine zur ersten Schrägfläche 28 korrespondierend ausgerichtete Anlagefläche aufweist. Zudem ist aus der Figur 1A erkennbar, dass der Auflagering 34 radial nach außen über die erste Erweiterung 16 und die zweite Erweiterung 22 übersteht. Zudem steht der Auflagering 34 über die erste Stirnfläche 18 über, wenn der Auflagering 34 mit der ersten Rückfläche 20 zur Anlage gebracht ist. Aufgrund dieser Ausgestaltung bildet der Auflagering 34 eine Aufnahmeöffnung 36, in welche das zweite Leitungsende 14 mit ihrer zweiten Erweiterung 22 einbringbar ist, wie es in Figur 1A dargestellt ist. Dabei definieren das erste Leitungsende 12 und das zweite Leitungsende 14 eine Längsachse L, zu welcher der Auflagering 34 konzentrisch angeordnet ist.

Weiterhin umfasst die Verbindungsvorrichtung 10₁ eine Sperreinrichtung 38, die im ersten Ausführungsbeispiel ringförmig ausgestaltet ist und ein Innengewinde aufweist. Die Sperreinrichtung 38 kann folglich auf den Auflagering 34 aufgeschraubt und koaxial zur Längsachse L positioniert werden, wobei der Auflagering 34 ein entsprechend ausgebildetes Außengewinde aufweist, wobei das Innengewinde und das Außengewinde in der Figur 1A nicht näher dargestellt sind. Zum Drehen der Sperreinrichtung 38 weist diese ein Griffstück 40 auf, welches nach Art eines Handrads 68 ausgebildet ist. Ein Benutzer kann folglich die Sperreinrichtung 38 auf einfache Weise drehen und somit auf den Auflagering 34 aufschrauben.

Weiterhin ist ein Sperrkörper 42 vorgesehen, der im ersten Ausführungsbeispiel am Auflagering 34 befestigt ist. Der Sperrkörper 42 ist derart am Auflagering 34 befestigt, dass er um eine senkrecht zur Längsachse L verlaufende Drehachse DS drehbar ist, wobei der Sperrkörper 42 im Bereich der Aufnahmeöffnung 36 am Auflagering 34 befestigt ist und somit von der ersten Rückfläche 20 aus gesehen vor der ersten Stirnfläche 18 angeordnet ist. Die Drehachse DS verläuft exzentrisch durch den Sperrkörper 42, der im ersten Ausführungsbeispiel bezogen auf die von Figur 1A definierten Darstellungsebene in etwa einen dreieckigen Querschnitt aufweist. Der Sperrkörper 42 ist so gelagert, dass er je nach Stellung der Sperreinrichtung 38 mit derselben zusammen wirken kann. In Figur 1A befindet sich die Sperreinrichtung 38 in einer Offenstellung, in welcher sie nicht mit dem Sperrkörper 42 zusammenwirkt. Folglich lässt sich der Sperrkörper 42 weitgehend unbeschränkt um seine Drehachse DS drehen. Infolgedessen lässt sich das zweite Leitungsende 14 in die Aufnahmeöffnung 36 einbringen, ohne dass der Sperrkörper 42 hierbei stört.

Das zweite Leitungsende 14 wird dabei so weit in die Aufnahmeöffnung 36 eingebracht, dass die erste Stirnfläche 18 mit dem Dichtelement 32 in Kontakt kommt. Der Auflagering positioniert das zweite Leitungsende 14 insoweit vor, als dass es axial fluchtend zur Längsachse L des ersten Leitungsendes 12 ausgerichtet ist. Anschließend wird die Sperreinrichtung 38 um die Längsachse L gedreht, wodurch sie eine axiale Bewegung entlang der Längsachse L ausführt, welche bezogen auf die Figur 1A nach unten gerichtet ist. Dabei kommt ab einer gewissen Position die Sperreinrichtung 38 mit dem Sperrkörper 42 in Kontakt und dreht dabei den Sperrkörper 42 wiederum bezogen auf die in Figur 1A gewählte Darstellung im Uhrzeigersinn um seine Drehachse DS. Aufgrund seiner exzentrischen Lagerung kommt ein Teil des Sperrkörpers mit der zweiten Rückfläche 26 in Kontakt und bringt eine Schließkraft auf die zweite Rückfläche 26 auf, welche zumindest anteilig entlang der Längsachse L und zur ersten Stirnfläche 18 hin gerichtet ist. Infolgedessen wird das zweite Leitungsende 14 gegen die erste Stirnfläche 18 des ersten Leitungsendes 12 gedrückt, wodurch das Dichtelement 32 gestaucht wird. Der Sperrkörper 42 befindet sich nun in einer Schließstellung. Das erste Leitungsende 12 und das zweite Leitungsende 14 sind nun dichtend miteinander verbunden, wie es in Figur 1B dargestellt ist, so dass Fluide, partikelförmige Festkörper oder dergleichen vom ersten Leitungsende 12 in das zweite Leitungsende 14 und umgekehrt befördert werden können.

Zum Lösen des zweiten Leitungsendes 14 vom ersten Leitungsende 12 wird die Sperreinrichtung 38 in eine Position gebracht, dass diese nicht mehr mit dem Sperrkörper 42 zusammenwirkt, beispielsweise in die in Figur 1A gezeigte Position.

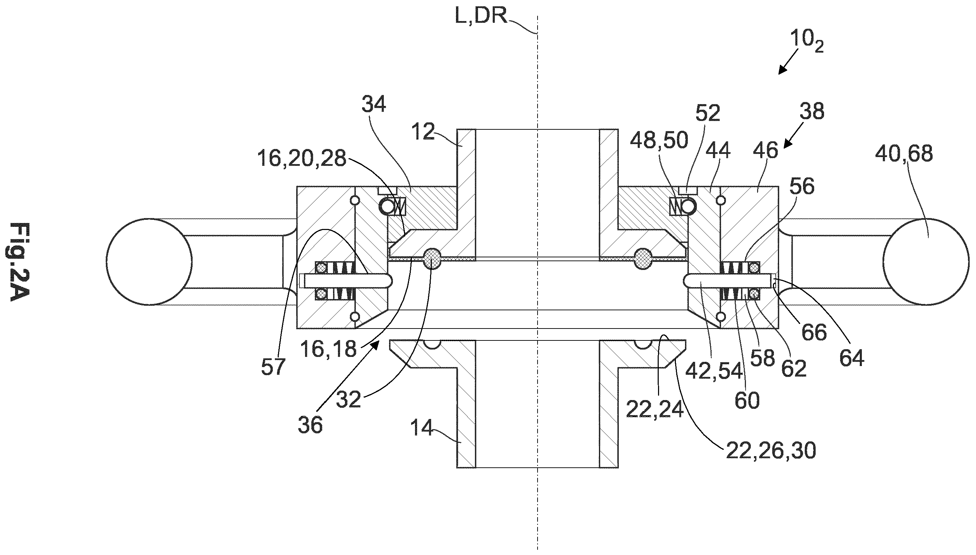

In den Figuren 2A bis 2C ist ein zweites Ausführungsbeispiel der erfindungsgemäßen Verbindungsvorrichtung 10₂ ebenfalls anhand von prinzipiellen Schnittdarstellungen gezeigt. Dabei sind das erste Leitungsende 12 und das zweite Leitungsende 14 im Wesentlichen genauso aufgebaut wie für das in den Figuren 1A und 1B gezeigte Ausführungsbeispiel beschrieben, so dass auf die diesbezügliche Beschreibung verwiesen werden kann. Auch in diesem Fall umfasst die Verbindungsvorrichtung 10₂ den bereits erwähnten Auflagering 34, der mit der ersten Rückfläche 20 des ersten Leitungsendes 12 in Anlage gebracht werden kann, wie auch in Figur 2A dargestellt. Allerdings steht der Auflagering 34 in radialer Richtung in nur sehr geringem Maß über die erste Erweiterung 16 über. Zudem umfasst die Sperreinrichtung 38 in diesem Fall einen ersten Ring 44 und einen zweiten Ring 46. Der zweite Ring 46 ist um den ersten Ring 44 um eine Drehachse DR drehbar an demselben befestigt, ohne dass dabei der zweite Ring 46 axial bewegt werden kann. Die Drehachse DR fällt mit der Längsachse L des ersten Leitungsendes zusammen. Der erste Ring 44 ist lösbar mit dem Auflagering 34 verbindbar. Hierzu ist eine Rastverbindung 48 mit entsprechend ausgebildeten Rastmitteln 50 vorgesehen, so dass der erste Ring 44 nur auf den Auflagering 34 aufgeschoben werden muss, bis dass die Rastmittel 50 eine formschlüssige Verbindung zwischen dem ersten Ring 44 und dem Auflagering 34 herstellen. Weiterhin ist eine Verdrehsicherung 52 vorgesehen, mit welcher sichergestellt wird, dass sich der erste Ring 44 nicht um den Auflagering 34 drehen kann. Der erste Ring 44 und der zweite Ring 46 sind konzentrisch zur Längsachse L angeordnet.

Der bereits erwähnte Sperrkörper 42 ist in diesem Fall in der Sperreinrichtung 38 gelagert und als ein Sperrstift 54 ausgebildet. Der Sperrstift 54 ist axial verschiebbar in einer Sacklochbohrung 56 des zweiten Rings 46 gelagert und durchläuft eine Bohrung 57 des ersten Rings 44. Der Sperrstift 54 umfasst einen Kragen 58, an welchem sich ein erstes Vorspannmittel 60 und ein zweites Vorspannmittel 62 abstützen. Das erste Vorspannmittel 60 stützt sich weiterhin am ersten Ring 44 ab, während sich das zweite Vorspannmittel 62 an dem Grund der Sacklochbohrung 56 abstützt. Während das erste Vorspannmittel 60 als eine Feder ausgeführt ist, ist das zweite Vorspannmittel 62 als ein elastischer O-Ring realisiert. Weiterhin ragt der Sperrstift 54 in eine Nut 64 hinein, die sich um ein gewisses Maß in Umfangsrichtung des zweiten Rings 46 erstreckt und an ihrem Nutgrund eine Stellfläche 66 bildet. Der Abstand der Stellfläche 66 zur Längsachse L ändert sich in Umfangsrichtung der Nut 64.

Das erste Vorspannmittel 60 ist so ausgebildet, dass sie den Sperrstift 54 zur Stellfläche 66 hin vorspannt, während das zweite Vorspannmittel 62 den Sperrstift 54 radial nach innen vorgespannt.

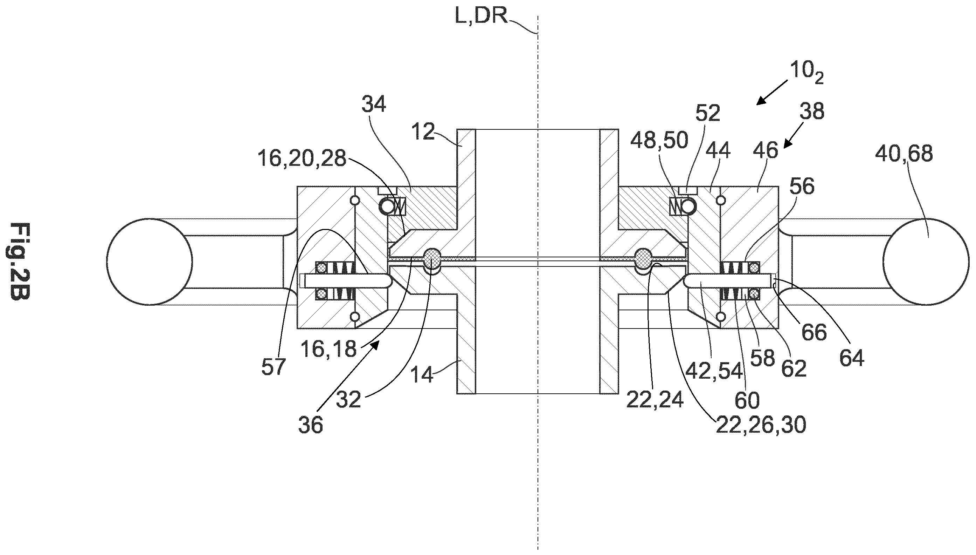

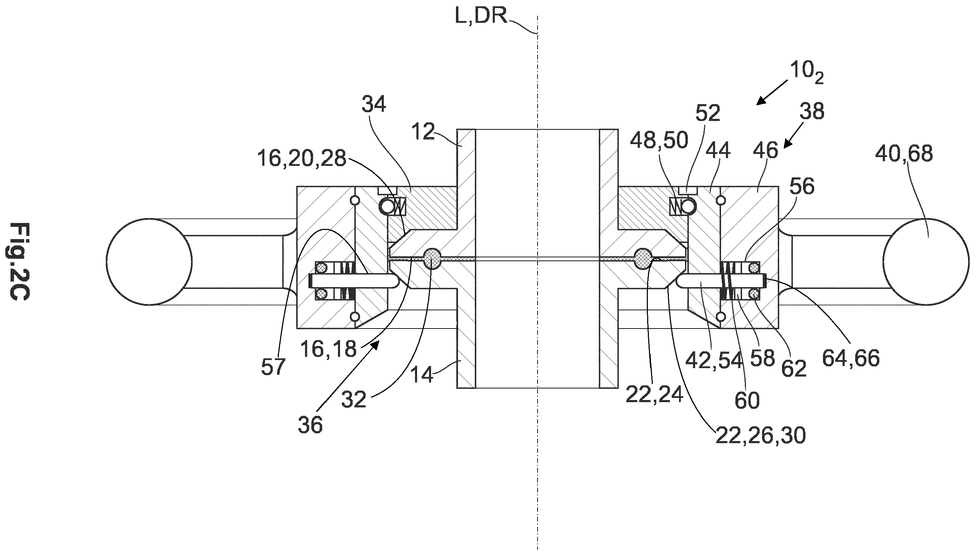

In Figur 2A befindet sich die Verbindungsvorrichtung 10₂ in einer Ausgangsstellung. In dieser Ausgangsstellung ist das zweite Leitungsende 14 noch nicht in die Aufnahmeöffnung 36, die in diesem Fall vom ersten Ring 44 gebildet wird, eingebracht. Der Sperrstift 54 berührt in diesem Fall noch nicht die Stellfläche 66 und kann daher noch um ein gewisses Maß radial nach außen bewegt werden. In Figur 2B ist das zweite Leitungsende 14 in die Aufnahmeöffnung 36 eingebracht, wobei der Sperrstift 54 an der zweiten Schrägfläche 30 anliegt. Beim Einbringen des zweiten Leitungsendes 14 in die Aufnahmeöffnung 36 kommt die zweite Erweiterung 22 in Kontakt mit dem Sperrstift 54 und bewegt diesen so weit radial nach außen, dass der Sperrstift 54 die axiale Bewegung des zweiten Leitungsendes 14 nicht blockiert. Dabei werden die zweiten Vorspannmittel 62 komprimiert, wodurch eine radial nach innen gerichtete Rückstellkraft erzeugt wird. Sobald das zweite Leitungsende 14 so weit zum ersten Leitungsende 12 hin bewegt worden ist, dass der Durchmesser der zweiten Erweiterung 22 im Bereich der zweiten Schrägfläche 30 abnimmt, wird der Sperrstift 54 aufgrund der Rückstellkraft der zweiten Vorspannmittel 62 wieder radial nach innen verschoben, wobei der Sperrstift 54 mit der zweiten Schrägfläche 30 in Kontakt treten kann. In der in Figur 2B gezeigten Stellung wird infolgedessen das zweite Leitungsende 14 vom Sperrstift 54 in der dort gezeigten Stellung gehalten, allerdings liegt das zweite Leitungsende 14 noch nicht vollflächig an dem Dichtelement 32 an, so dass noch keine abdichtenden Verbindung zwischen dem ersten Leitungsende 12 und dem zweiten Leitungsende 14 vorliegt. Allerdings kann die betreffende Person ihre Hand von dem zweiten Leitungsende 14 nehmen und das Griffstück 40 zum Drehen des zweiten Rings 46 ergreifen. Wie erwähnt, ändert sich der Abstand der Stellfläche 66 zur Längsachse L in Umfangsrichtung der Nut 64. Der zweite Ring 46 wird nun so gedreht, dass sich der Abstand der Stellfläche 66 zur Längsachse L im Bereich des Sperrstifts 54 verringert. Folglich tritt der Sperrstift 54 ab einer gewissen Drehstellung des zweiten Rings 46 mit der Stellfläche 66 in Kontakt. Je weiter der zweite Ring 46 gedreht wird, desto weiter wird der Sperrstift 54 radial nach innen bewegt und gegen die zweite Schrägfläche 30 gedrückt. Hierbei überträgt der Sperrstift 54 anteilig eine entlang der Längsachse L gerichtete Kraft auf die zweite Schrägfläche 30, infolgedessen das zweite Leitungsende 14 zur ersten Stirnfläche 18 des ersten Leitungsendes 12 hin verschoben wird. Dabei tritt die zweite Stirnfläche 24 mit dem Dichtelement 32 in dichtenden Kontakt, so dass das erste Leitungsende 12 und das zweite Leitungsende 14 dichtend miteinander verbunden sind. Der Sperrstift 54 befindet sich nun in der Schließstellung (siehe Figur 2C).

Aufgrund der radial nach innen gerichteten Bewegung des Sperrstifts 54 werden die ersten Vorspannmittel 60 komprimiert, welche infolgedessen eine radial nach außen gerichtete Rückstellkraft ausüben. Aufgrund des Kontakts des Sperrstifts 54 mit der Stellfläche 66 verbleibt der Sperrstift 54 in der in Figur 2C dargestellten Position, so dass das zweite Leitungsende 14 nicht mehr relativ zum ersten Leitungsende 12 axial verschoben werden kann.

Um das zweite Leitungsende 14 vom ersten Leitungsende 12 wieder zu lösen, wird der zweite Ring 46 in die entgegengesetzte Richtung gedreht. Aufgrund der von den ersten Vorspannmitteln 60 erzeugten Rückstellkraft ist sichergestellt, dass der Sperrstift 54 auch beim Drehen des zweiten Rings 46 gegen die Stellfläche 66 gedrückt wird. Da sich der Abstand der Stellfläche 66 von der Längsachse L in diesem Fall vergrößert, bewegt sich der Sperrstift 54 radial nach außen. Infolgedessen wird das zweite Leitungsende 14 freigegeben und kann vom ersten Leitungsende 12 gelöst werden.

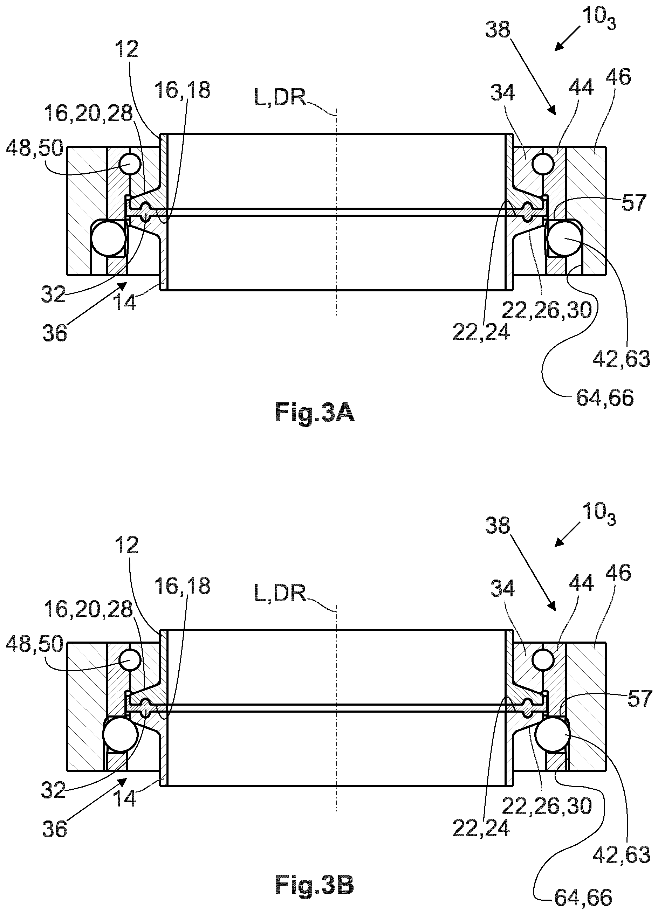

In den Figuren 3A und 3B ist ein drittes Ausführungsbeispiel der Verbindungsvorrichtung 10₃ anhand einer Schnittdarstellung gezeigt, wobei in Figur 3A das zweite Leitungsende 14 vorpositioniert ist, während in Figur 3B das erste Leitungsende 12 und das zweite Leitungsende 14 miteinander verbunden sind. Die Verbindungsvorrichtung 10₃ nach dem dritten Ausführungsbeispiel ist ähnlich wie die Verbindungsvorrichtung 10₂ nach dem zweiten Ausführungsbeispiel aufgebaut, so dass im Folgenden nur auf die wesentlichen Unterschiede eingegangen wird. Der Sperrkörper 42 ist als eine Sperrkugel 63 ausgeführt, welche wie der Sperrstift 54 des zweiten Ausführungsbeispiels der Verbindungsvorrichtung 10₂ in einer Bohrung 57 des ersten Rings 44 gelagert ist. Auch in diesem Ausführungsbeispiel weist der zweite Ring 46 die bereits erwähnte Nut 64 auf, an deren Nutgrund die Stellfläche 66 gebildet wird. Der Abstand der Stellfläche 66 zur Drehachse DR des zweiten Rings 46 ändert sich in Umfangsrichtung der Nut 64. Die Sperrkugel 63 liegt an der Stellfläche 66 an. Wird der zweite Ring 46 gedreht, wird die Sperrkugel 63 radial nach innen bewegt und gegen die zweite Schrägfläche 30 gedrückt. Hierbei überträgt die Sperrkugel 63 anteilig eine entlang der Längsachse L gerichtete Kraft auf die zweite Schrägfläche 30, infolgedessen das zweite Leitungsende 14 zur ersten Stirnfläche 18 des ersten Leitungsendes 12 hin verschoben wird. Dabei tritt die zweite Stirnfläche 24 mit dem Dichtelement 32 in dichtenden Kontakt, so dass das erste Leitungsende 12 und das zweite Leitungsende 14 dichtend miteinander verbunden sind. Die Sperrkugel 63 befindet sich nun in der Schließstellung (siehe Figur 3B).

Zum Lösen des ersten Leitungsendes 12 vom zweiten Leitungsende 14 wird der zweite Ring 46 wieder zurück in die in Figur 3A dargestellte Stellung gedreht. Wird das zweite Leitungsende 14 vom ersten Leitungsende 12 weg bewegt, wird die Sperrkugel 63 radial nach außen gedrückt und gibt den Weg für das zweite Leitungsende 14 frei, so dass das zweite Leitungsende 14 aus der Aufnahmeöffnung 36 entnommen werden kann.

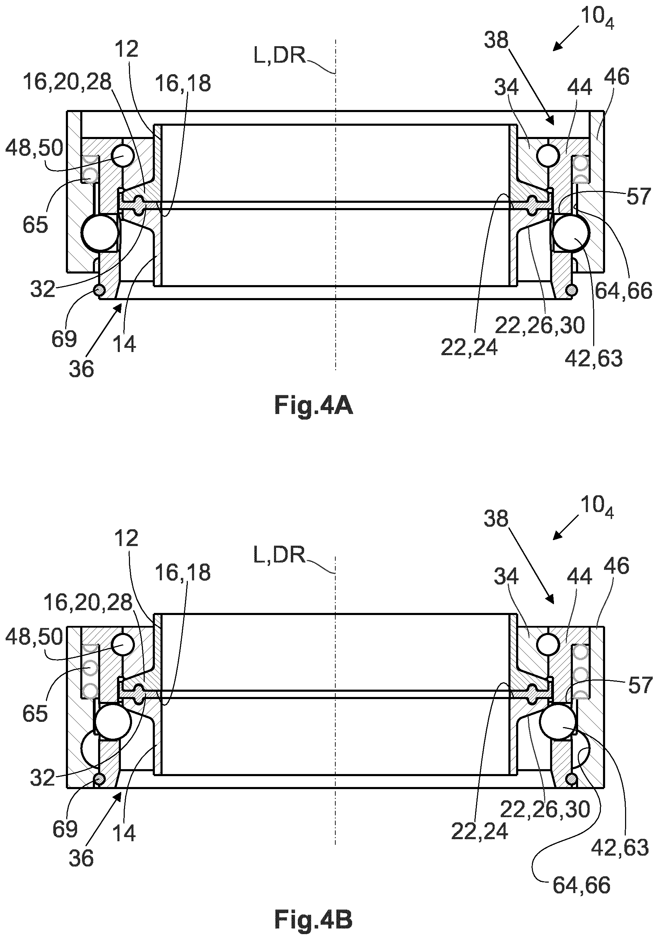

In den Figuren 4A und 4B ist ein viertes Ausführungsbeispiel der Verbindungsvorrichtung 10₄ anhand einer Schnittdarstellung gezeigt, wobei in Figur 4A das zweite Leitungsende 14 vorpositioniert ist, während in Figur 4B das erste Leitungsende 12 und das zweite Leitungsende 14 miteinander verbunden sind. Auch in diesem Ausführungsbeispiel ist der Sperrkörper 42 als eine Sperrkugel 63 ausgeführt, die in einer Bohrung 57 des ersten Rings 44 gelagert ist. In diesem Ausführungsbeispiel ist der zweite Ring 46 axial gegenüber dem ersten Ring 44 bewegbar und wird mit einer Feder 65 in die in Figur 4B gezeigte Stellung vorgespannt. Zum Definieren dieser Position ist ein Stoppelement 69 am ersten Ring 44 vorgesehen, mit welcher die axiale Beweglichkeit des zweiten Rings 46 begrenzt wird. Der zweite Ring 46 ist auch in diesem Ausführungsbeispiel mit der Nut 64 ausgestattet, allerdings ändert sich Abstand der Stellfläche 66 zur Drehachse DR in Umfangsrichtung nicht, allerdings in axialer Richtung. In diesem Fall muss der zweite Ring 46 nicht notwendigerweise drehbar am ersten Ring 44 befestigt sein. Insofern ist der Begriff "Drehachse" DR geometrisch und nicht funktionell zu verstehen. Befindet sich der zweite Ring 46 in der in Figur 4B gezeigten Stellung, wird die Sperrkugel 63 gegen die zweite Schrägfläche 30 gedrückt, so dass das zweite Leitungsende 14 gegen das erste Leitungsende 12 gedrückt wird. Die Sperrkugel 63 kann radial nach außen nicht ausweichen, so dass das zweite Leitungsende 14 nicht mehr relativ zum ersten Leitungsende 12 axial verschoben werden kann.

Um das zweite Leitungsende 14 vom ersten Leitungsende 12 wieder zu lösen, wird der zweite Ring 46 gegen die Vorspannkraft der Feder 65 in die in Figur 4A gezeigte Stellung verschoben, in welcher der radiale Abstand der Stellfläche 66 zur Drehachse DR im Bereich der Sperrkugel 63 ansteigt und so groß ist, dass die Sperrkugel 63 radial nach außen so weit ausweichen kann, dass das zweite Leitungsende 14 freigegeben wird und vom ersten Leitungsende 12 gelöst werden kann.

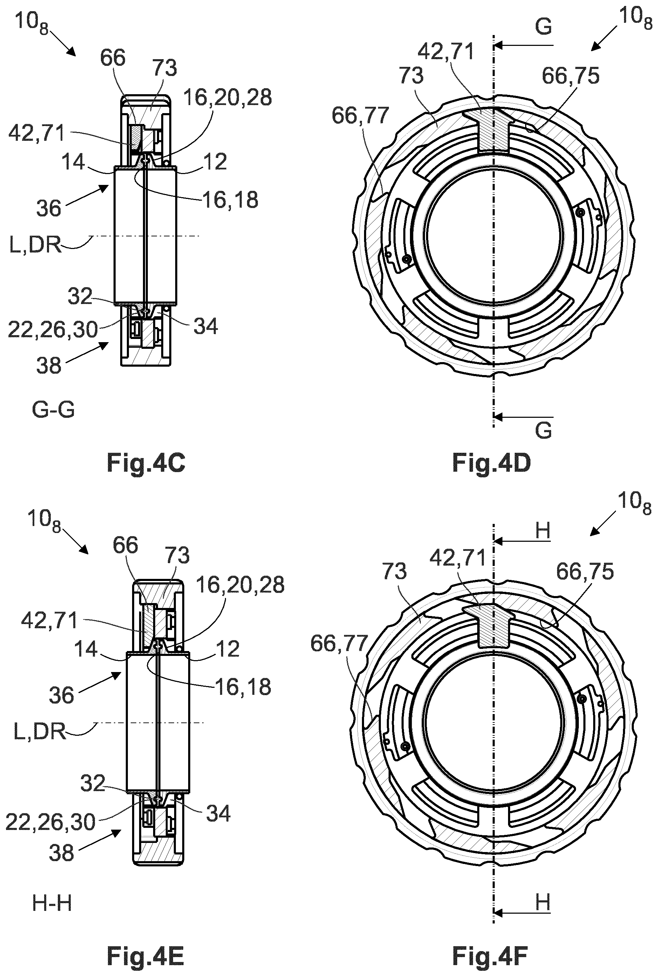

In den Figuren 4C bis 4F ist ein achtes Ausführungsbeispiel der der Verbindungsvorrichtung 10₈ anhand von verschiedenen Darstellungen gezeigt. Figur 4C zeigt die Verbindungsvorrichtung 10₈ entlang der in Figur 4D definierten Schnittebene G-G, während Figur 4E die Verbindungsvorrichtung 10₈ entlang der in Figur 4F definierten Schnittebene H-H zeigt. In den Figuren 4C und 4D ist das zweite Leitungsende 14 vorpositioniert, während in den Figuren 4E und 4F das erste Leitungsende 12 und das zweite Leitungsende 14 miteinander verbunden sind.

In diesem Ausführungsbeispiel ist der Sperrkörper 42 der Sperreinrichtung 38 als ein Sperr-Nutenstein 71 ausgeführt und radial bewegbar im Auflagering 34 gelagert. Hierzu kann der Auflagering 34 eine komplementär zum Sperr-Nutenstein 71 ausgebildete Nut aufweisen. Aus Darstellungsgründen ist nur ein Sperr-Nutenstein 71 gezeigt, es sind aber insgesamt sechs Sperr-Nutensteine 71 vorgesehen.

Die Sperreinrichtung 38 umfasst weiterhin einen Stellring 73, der um die Drehachse DR drehbar am Auflagering 34, aber entlang der Drehachse fixiert am Auflagering 34 gelagert ist. Der Stellring 73 weist die Stellfläche 66, die ebenfalls einen sich ändernden Abstand zur Drehachse DR aufweist. Der Sperr-Nutenstein 71 tritt an der Stellfläche 66 mit dem Stellring 73 in Kontakt.

In den Figuren 4C und 4D befindet sich der Sperr-Nutenstein 71 in einer Offenstellung, in welcher das zweite Leitungsende 14 durch die Aufnahmeöffnung 36 in die Verbindungsvorrichtung 10₈ eingebracht werden kann, um das zweite Leitungsende 14 mit dem ersten Leitungsende 12 in Anlage zu bringen (Figur 4C). Nun wird der Stellring 73 bezogen auf die Figuren 4C bis 4F gegen den Uhrzeigersinn um die Drehachse DR gedreht. Aufgrund des sich ändernden Abstands der Stellfläche 66 zur Drehachse DR wird infolge der Drehung des Stellrings 73 der Sperr-Nutenstein 71 radial nach innen verschoben, wozu die Stellfläche 66 nach innen gerichtete Abschnittsflächen 75 aufweisen, die mit zumindest abschnittsweise komplementär ausgebildeten Flächen des Sperr-Nutensteins 71 zusammenwirken. Sowohl die nach innen gerichtete Abschnittsflächen 75 als auch die hiermit zusammenwirkenden Flächen des Sperr-Nutensteins 71 sind so geformt, dass eine Endstellung des Sperr-Nutensteins 71 definiert werden kann, was aus einem Vergleich der Figuren 4D und 4F hervorgeht.

Aufgrund der radial einwärts gerichteten Bewegung tritt der Sperr-Nutenstein 71 mit der zweiten Rückfläche 26 der zweiten Erweiterung 22 in Kontakt tritt und eine entlang der Drehachse DR gerichtete Kraft auf das zweite Leitungsende 14 aufbringt, wodurch das erste Leitungsende 12 und das zweite Leitungsende 14 miteinander verbunden werden.

Zum Lösen wird der Stellring 71 in die entgegengesetzte Richtung gedreht, hier also im Uhrzeigersinn. Um eine radial nach außen gerichtete Kraft auf den Sperr-Nutenstein 71 aufzubringen, weist die Stellfläche 66 radial nach außen gerichtete Abschnittsflächen 77 auf, die mit entsprechenden Gegenflächen des Sperr-Nutensteins 71 zusammenwirken, wodurch sich der Sperr-Nutenstein 71 radial nach außen bewegt.

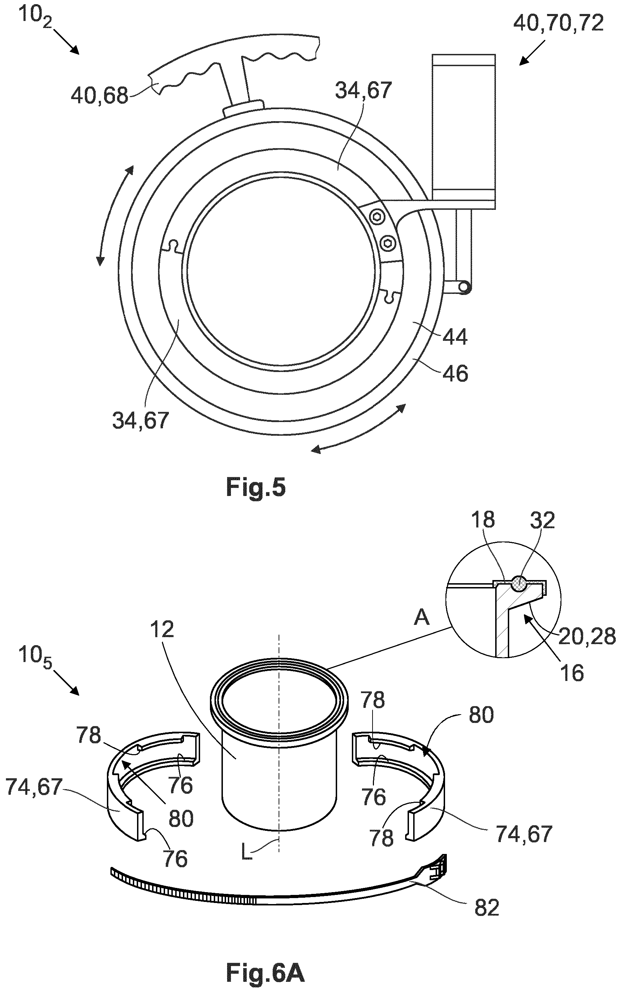

In Figur 5 ist eine prinzipielle Draufsicht auf das in den Figuren 2A bis 2C dargestellte zweite Ausführungsbeispiel der Verbindungsvorrichtung 10₂ gezeigt. Man erkennt, dass der Auflagering 34 von zwei Ringsegmenten 67 gebildet wird, welche baugleich ausgeführt sind und formschlüssig miteinander verbunden werden können. Wie bereits erwähnt, schließt der Auflagering 34 mehr oder weniger bündig in radialer Richtung mit der ersten Erweiterung 16 ab, so dass der erste Ring 44 auf dem Auflagering 34 aufgeschoben werden kann, ohne dass er dabei gegen die erste Erweiterung 16 anstößt. Infolgedessen kann der erste Ring 44 unabhängig davon, ob das erste Leitungsende 12 Teil einer fest mit einem Bauteil, insbesondere mit einem Behälter, verbundenen Leitung ist, über die erste Erweiterung 16 geschoben werden. Wenn jedoch die mit dem ersten Leitungsende 12 verbundene Leitung fest mit einem Behälter oder dergleichen verbunden ist, ist es nicht möglich, einen einteiligen Auflagering 34 von der ersten Stirnfläche 18 ausgesehen hinter der ersten Erweiterung 16 so anzuordnen, dass der Auflagering 34 mit der ersten Rückfläche 20 zur Anlage gebracht werden kann. Die Verwendung eines zwei- oder mehrteiligen Auflagerings 34 unter Ausbildung der Ringsegmente 67 hingegen ermöglicht diese Anordnung.

Zudem ist in Figur 5 das Griffstück 40 zu erkennen, welches als ein nur teilweise dargestelltes Handrad 68 ausgebildet ist. Ferner ist am Auflagering 34 eine Antriebseinheit 70 befestigt mit welcher es möglich ist, automatisiert den zweiten Ring 46 um die Längsachse L zu drehen. Im dargestellten Ausführungsbeispiel umfasst die Antriebseinheit 70 eine Kolben-Zylindereinheit 72, welche beispielsweise pneumatisch oder hydraulisch betätigt werden kann.

In den Figuren 6A bis 6G ist ein fünftes Ausführungsbeispiel einer vorschlagsgemäßen Verbindungsvorrichtung 10₅ in verschiedenen Zuständen dargestellt, wobei einige der Figuren 6A bis 6G vergrößert dargestellte Ausschnitte A bis E aufweisen. Figur 6A zeigt die Verbindungsvorrichtung 10₅ in einem Ausgangszustand. Zudem ist ein erstes Leitungsende 12 gezeigt, welches genauso aufgebaut ist wie die zuvor beschriebenen ersten Leitungsenden 12, die mit einem herkömmlichen Triclamp verwendet werden können. Zudem ist im vergrößert dargestellten Ausschnitt A erkennbar, dass an der ersten Stirnfläche 18 ein Dichtelement 32 mit dem ersten Leitungsende 12 verbunden ist.

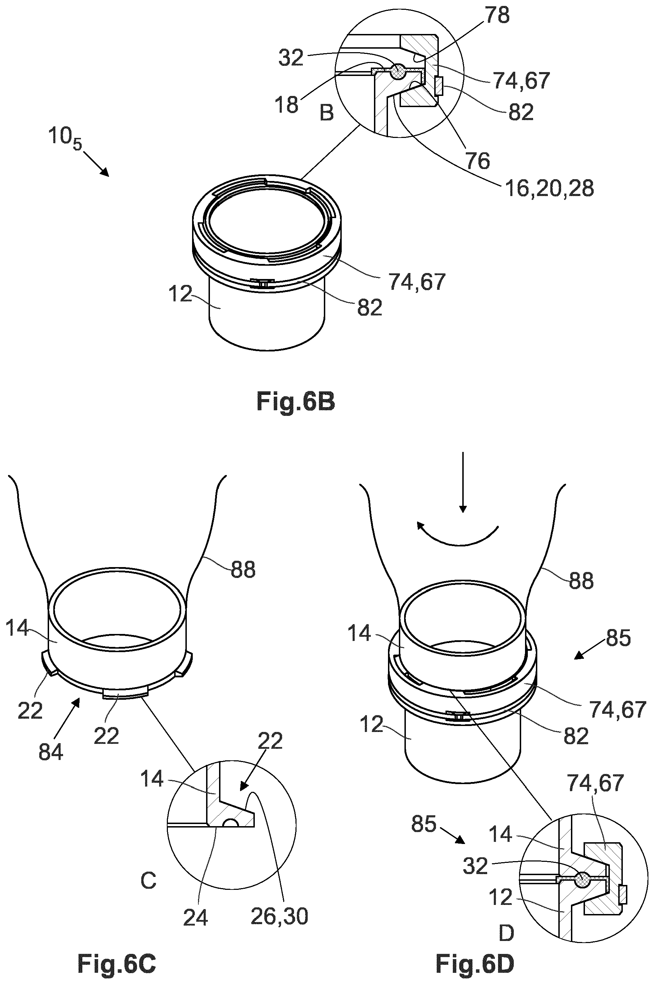

Die Verbindungsvorrichtung 10₅ gemäß dem fünften Ausführungsbeispiel umfasst einen Verbindungsring 74, der im dargestellten Ausführungsbeispiel von zwei Ringsegmenten 67 gebildet wird, welche mittels eines Kabelbinders 82 miteinander verbunden werden können, wie aus Figur 6B ersichtlich. Der Verbindungsring 74 weist eine radial unterbrechungsfrei umlaufende erste Verschlussfläche 76 auf, welche korrespondierend zur ersten Schrägfläche 28 der ersten Erweiterung 16 des ersten Leitungsendes 12 ausgebildet ist. Weiterhin umfasst der Verbindungsring 74 eine Anzahl von zweiten Verschlussflächen 78, welche von nach Art einer Ausnehmung ausgestalteten Durchtrittsabschnitten 80 voneinander getrennt sind. Die zweiten Verschlussflächen 78 weisen dieselbe Neigung wie die ersten Verschlussflächen 76 auf, wie insbesondere aus dem vergrößert dargestellten Ausschnitt B der Figur 6B zu erkennen ist.

In Figur 6C ist ein zweites Leitungsende 14 gezeigt, welches eine Anzahl von zweiten Erweiterungen 22 aufweist, wobei die zweiten Erweiterungen 22 mit Unterbrechungsabschnitten 84 voneinander getrennt sind, die ebenfalls nach Art einer Ausnehmung ausgestaltet sind. Im Übrigen sind die zweiten Erweiterungen 22 genauso aufgebaut wie die zuvor beschriebenen zweiten Erweiterungen 22.

Zum Verbinden des zweiten Leitungsendes 14 mit dem ersten Leitungsende 12 wird zunächst der Verbindungsring 74 unter Verwendung des Kabelbinders 82 mit dem ersten Leitungsende 12 verbunden, wie es in Figur 6B dargestellt ist. Anschließend wird das zweite Leitungsende 14 koaxial zum ersten Leitungsende 12 angeordnet, wobei das zweite Leitungsende 14 in eine Drehstellung gebracht wird, in welcher die zweiten Erweiterungen 22 durch die Durchtrittsabschnitte 80 des Verbindungsrings 74 axial durchgeführt werden können. Sobald sich die zweiten Erweiterungen 22 axial gesehen hinter den zweiten Verschlussflächen 78 des Verbindungsring 74 befinden, wird das zweite Leitungsende 14 gedreht, so dass die zweiten Rückflächen 26 der zweiten Erweiterungen 22 mit den zweiten Verschlussflächen 78 des Verbindungsring 74 zur Anlage gebracht werden können. Das erste Leitungsende 12 und das zweite Leitungsende 14 werden folglich nach Art eines Bajonettverschlusses miteinander verbunden.

Sowohl die zweiten Verschlussflächen 78 als auch die zweiten Rückflächen 26 sind dabei in Umfangsrichtung etwas geneigt und daher rampenförmig ausgebildet. Dies hat zur Folge, dass beim Drehen des zweiten Leitungsendes 14 dasselbe auch axial zum ersten Leitungsende 12 hin verschoben wird, so dass eine dichtende Anlage der zweiten Stirnfläche 24 am Dichtelement 32 erreicht wird, wie es aus der Figur 6D hervorgeht. Infolgedessen sind das erste Leitungsende 12 und das zweite Leitungsende 14 dichtend miteinander verbunden.

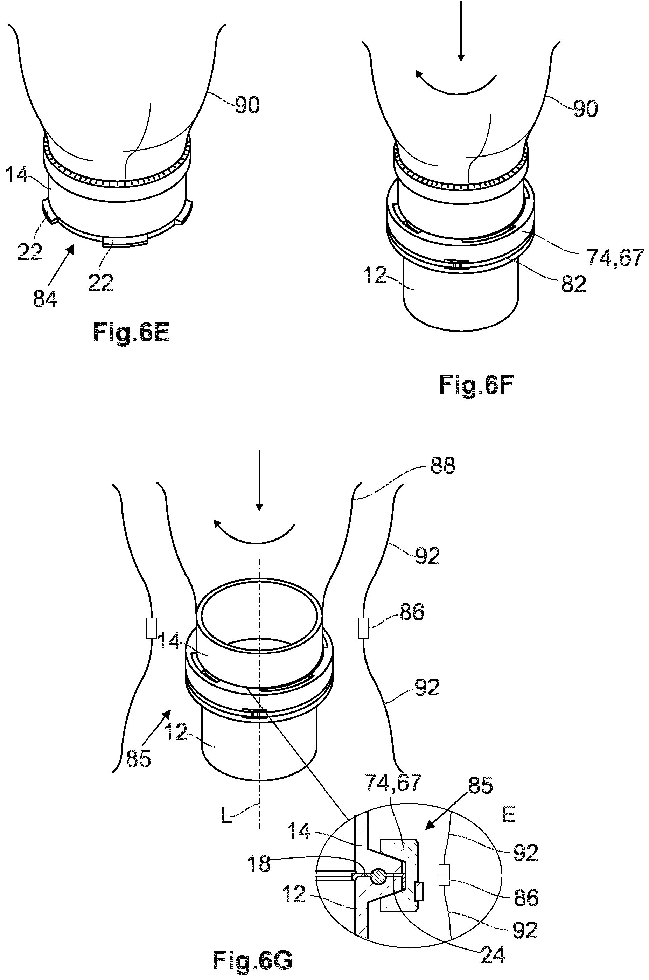

Aus den Figuren 6C und 6D ist zu entnehmen, dass eine flexible Umhüllung 88 mit dem zweiten Leitungsende 14 verbunden ist. In den Figuren 6E und 6F ist eine anders ausgebildete Umhüllung 90 mit dem zweiten Leitungsende 14 verbunden. Es ist also möglich, ganz unterschiedliche Bauteile unter Verwendung der Verbindungsvorrichtung 10₁ mit dem standardisierten ersten Leitungsende 12 zu verbinden.

Figur 6G zeigt das in Figur 6D gezeigte erste Leitungsende 12 und das zweite Leitungsende 14 im verbundenen Zustand, wobei radial außerhalb der Verbindungsvorrichtung 10₅ eine Sekundärschnittstelle 86 angeordnet ist. Die Sekundärschnittstelle 86 verbindet zwei schlauchförmige Schutzhüllen 92, wodurch verhindert werden kann, dass eine Substanz, welche im Bereich der Verbindungsvorrichtung 10₅ aus dem ersten Leitungsende 12 oder dem zweiten Leitungsende 14 entweichen sollte, unkontrolliert in die Umwelt gelangen kann. Die Sekundärschnittstelle 86 sowie die Schutzhüllen 92 können analog auch für die Verbindungsvorrichtungen 10₁ bis 10₄ nach dem ersten Ausführungsbeispiel bis vierten Ausführungsbeispiel verwendet werden.

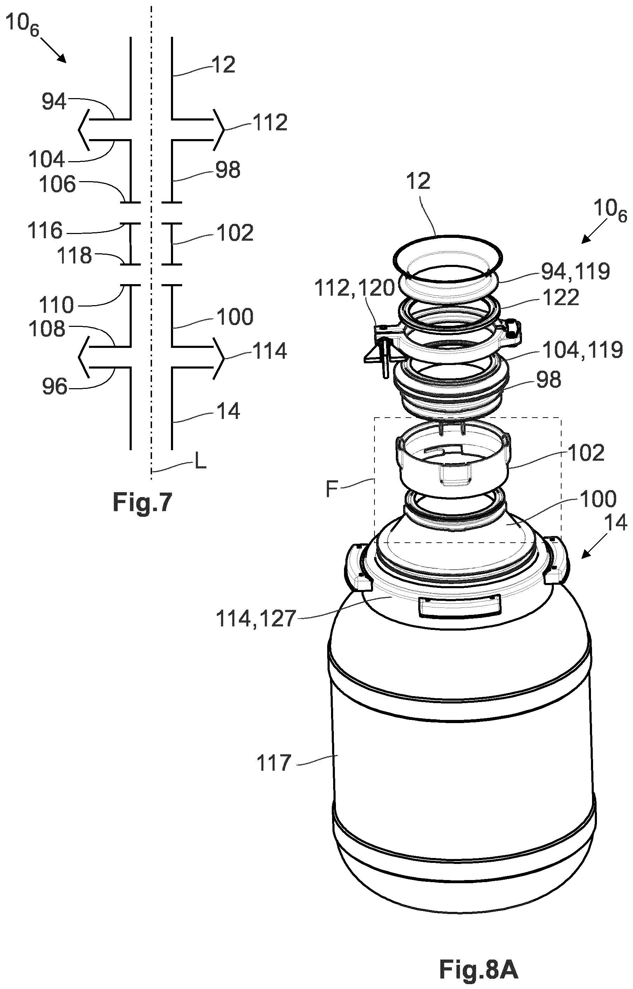

In Figur 7 ist eine prinzipielle Darstellung eines sechsten Ausführungsbeispiels einer erfindungsgemäßen Verbindungsvorrichtung 10₆ gezeigt. Das erste Leitungsende 12 weist einen ersten Verbindungsabschnitt 94 und das zweite Leitungsende 14 einen zweiten Verbindungsabschnitt 96 auf. Die Verbindungsvorrichtung 10₆ nach dem sechsten Ausführungsbeispiel umfasst einen ersten Verbindungskörper 98, einen zweiten Verbindungskörper 100 und einen Verriegelungskörper 102.

Der erste Verbindungskörper 98 bildet an einem Ende einen ersten Gegenverbindungsabschnitt 104 und an einem gegenüberliegenden Ende einen ersten Verriegelungsabschnitt 106. Entsprechend bildet der zweite Verbindungskörper 100 an einem Ende einen zweiten Gegenverbindungsabschnitt 108 und an einem gegenüberliegenden Ende einen zweiten Verriegelungsabschnitt 110.

Der erste Verbindungskörper 98 ist unter Verwendung des ersten Verbindungsabschnitts 94 und des ersten Gegenverbindungsabschnitts 104 mit dem ersten Leitungsende 12 verbindbar oder verbunden. Hierzu können geeignete erste Verbindungsmittel 112 verwendet werden.

Entsprechend ist der zweite Verbindungskörper 100 unter Verwendung des zweiten Verbindungsabschnitts 96 und des zweiten Gegenverbindungsabschnitts 108 mit dem zweiten Leitungsende 14 verbindbar oder verbunden, wozu ein geeignetes zweites Verbindungsmittel 114 eingesetzt wird.

Der Verriegelungskörper 102, der eine Längsachse L definiert, bildet an einem ersten Ende einen ersten Gegenverriegelungsabschnitt 116 und an einem zweiten Ende einen zweiten Gegenverriegelungsabschnitt 118. Mit dem ersten Gegenverriegelungsabschnitt 116 kann der Verriegelungskörper 102 unter Verwendung des ersten Verriegelungsabschnitts 106 mit dem ersten Verbindungskörper 98 verbunden werden. Analog hierzu kann der Verriegelungskörper 102 mit dem zweiten Gegenverriegelungsabschnitt 118 unter Verwendung des zweiten Verriegelungsabschnitts 110 mit dem zweiten Verbindungskörper 100 verbunden werden.

Dabei sind der erste Verriegelungsabschnitt 106 und der erste Gegenverriegelungsabschnitt 116 so ausgestaltet, dass die Verbindung mit einer translatorischen Relativbewegung des Verriegelungskörpers 102 und/oder des ersten Verbindungskörpers 98 entlang der Längsachse L miteinander verbunden werden können. Alternativ oder kumulativ hierzu kann eine rotatorische Drehbewegung um die Längsachse L notwendig sein, um den ersten Verbindungskörper 98 mit dem Verriegelungskörper 102 zu verbinden.

Der zweite Verriegelungsabschnitt 110 und der zweite Gegenverriegelungsabschnitt 118 können entsprechend ausgebildet sein.

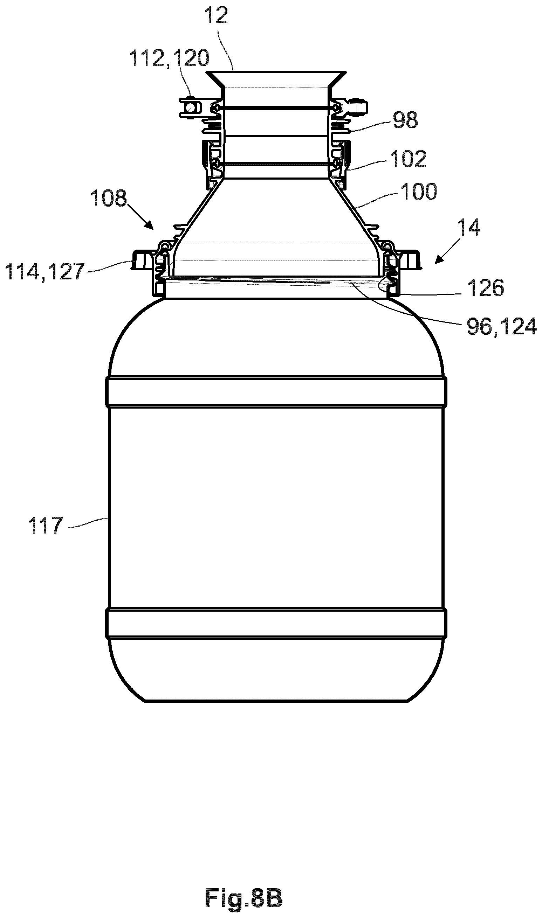

In den Figuren 8A bis 8F ist eine Verbindungsvorrichtung 10₆ nach dem sechsten Ausführungsbeispiel in verschiedenen Ansichten gezeigt. Figur 8A zeigt eine Explosionsdarstellung der Verbindungsvorrichtung 10₆, während Figur 8B die Verbindungsvorrichtung 10₆ im verbundenen Zustand zeigt. Soweit nicht anders vermerkt, bezieht sich die nachfolgende Beschreibung gleichermaßen auf die Figuren 8A und 8B. Das erste Leitungsende 12 wird in diesem Fall von einer kurzen, trichterförmigen Leitung gebildet und kann die Verbindung zu einem nicht dargestellten Prozessraum herstellen, während das zweite Leitungsende 14 von einem Behälter 117 gebildet wird. Der erste Verbindungsabschnitt 94 und der erste Gegenverbindungsabschnitt 104 sind als Triclamp-Stutzen 119 ausgebildet, so dass das erste Leitungsende 12 und der erste Verbindungskörper 98 mit dem als Triclamp-Klammer 120 ausgebildeten ersten Verbindungsmittel 112 miteinander verbunden werden können. Dazwischen ist eine Dichtung 122 angeordnet, um die Verbindung zwischen dem ersten Leitungsende 12 und dem ersten Verbindungskörper 98 abzudichten.

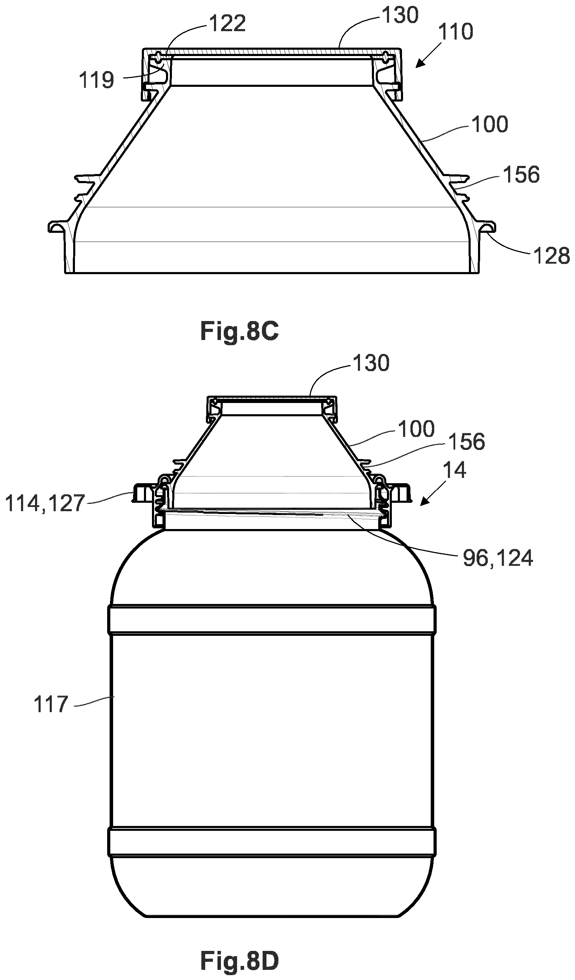

Wie insbesondere aus der Figur 8B ersichtlich, ist der zweite Verbindungsabschnitt 96 als ein Schraubaußengewinde 124 ausgebildet, wobei der zweite Verbindungsabschnitt 96 einen im Vergleich zum ersten Verbindungsabschnitt 94 größeren Durchmesser aufweist. Zum Überbrücken der Durchmesserunterschiede ist der zweite Verbindungskörper 100 trichterförmig ausgestaltet. Allerdings ist im dargestellten Ausführungsbeispiel der zweite Gegenverbindungsabschnitt 108 nicht als ein Schraubinnengewinde 126 ausgeführt, so dass der zweite Verbindungskörper 100 nicht auf den Behälter 117 aufschraubbar ist. Um dennoch die Verbindung zum Behälter 117 herstellen zu können, umfasst das zweite Verbindungsmittel 114 einen zweiten Adapter 127, der aufgrund der trichterförmigen Ausgestaltung des zweiten Verbindungskörpers 100 über diesen gestülpt und zur Anlage gebracht werden kann, wozu der zweite Verbindungskörper 100 Anlageflächen 128 aufweist (siehe Figur 8C). Der zweite Adapter 127 weist ein Schraubinnengewinde 126 auf, welches komplementär zum Schraubaußengewinde 124 ausgeführt ist, infolgedessen der zweite Adapter 127 auf den Behälter 117 geschraubt werden kann. Der zweite Adapter 127 kann dadurch hergestellt werden, dass in die eigentliche Abdeckung, die auf den Behälter 117 aufgeschraubt ist, eine Öffnung eingearbeitet wird, die so groß ist, dass die Abdeckung auf die Anlageflächen 128 gebracht werden kann.

Ebenfalls aus der Figur 8C, welche den zweiten Verbindungskörper 100 isoliert zeigt, aber auch aus Figur 8D geht hervor, dass der zweite Verbindungskörper 100 mit einem Deckel 130 verschlossen ist. Auf die Art und Weise, wie der Deckel 130 mit dem zweiten Verbindungskörper 100 verbunden ist, wird später genauer eingegangen. In Figur 8D ist der mit dem Deckel 130 verschlossene zweite Verbindungskörper 100 unter Verwendung des zweiten Adapters 127 mit dem Behälter 117 verbunden, während in Figur 8B der Deckel 130 entfernt ist und der zweite Verbindungskörper 100 mit dem Verriegelungskörper 102 verbunden ist. Der Verriegelungskörper 102 ist zudem mit dem ersten Verbindungskörper 98 verbunden, der, wie erwähnt, mittels der Triclamp-Klammern 120 mit dem ersten Leitungsende 12 verbunden ist. Folglich sind in Figur 8B das erste Leitungsende 12 und das zweite Leitungsende 14 unter Verwendung der Verbindungsvorrichtung 10₆ miteinander verbunden.

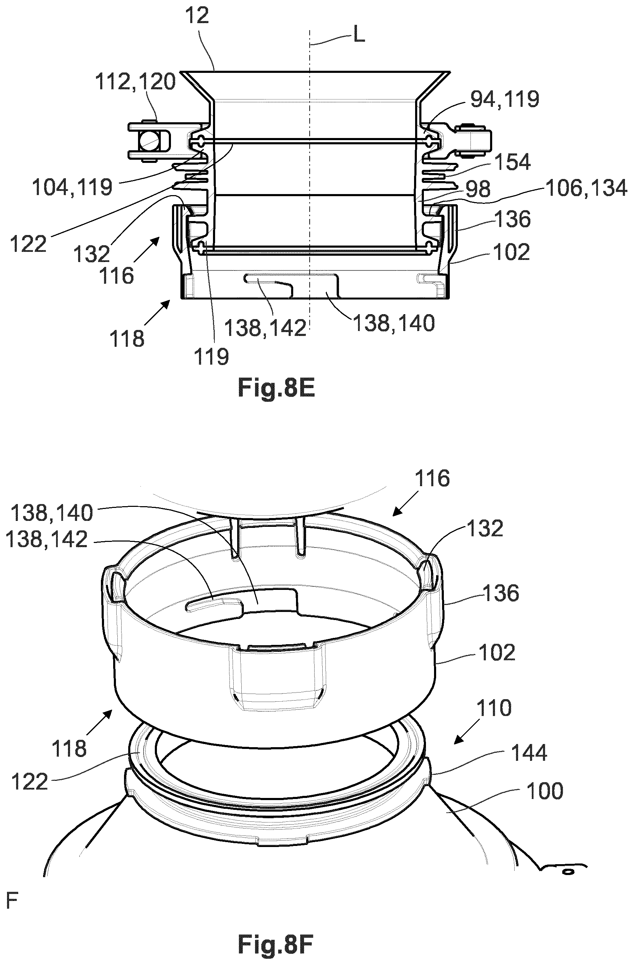

Insbesondere aus der Schnittdarstellung der Figur 8E geht hervor, wie der Verriegelungskörper 102 mit dem ersten Verbindungskörper 98 verbunden wird. Der erste Gegenverriegelungsabschnitt 116 weist eine Mehrzahl von Haken 132 auf, welche radial zur Längsachse L bewegbar sind. Darüber hinaus weist der erste Verbindungskörper 98 Verschlussflächen 134 auf, die infolge einer translatorischen Bewegung des ersten Verbindungskörpers 98 und des Verriegelungskörpers 102 entlang der Längsachse L von den Haken 132 hintergriffen werden, wie es in Figur 8E gezeigt ist. Während dieser translatorischen Bewegung werden die Haken 132 radial nach außen ausgelenkt und dabei reversibel elastisch verformt. Anschließend gehen sie in die Ausgangsstellung zurück. Folglich wird eine formschlüssige Verbindung zwischen dem ersten Verbindungskörper 98 und dem Verriegelungskörper 102 geschaffen.

Insbesondere aus der Figur 8F, welche den in Figur 8A gekennzeichneten Ausschnitt F vergrößert darstellt, ist erkennbar, dass der Verriegelungskörper 102 insgesamt vier Auswölbungen 136 aufweist, die radial zur Längsachse L nach außen vom übrigen Verriegelungskörper 102 vorspringen. Die Haken 132 werden von den Auswölbungen 136 umschlossen, wobei die Auswölbungen 136 die radiale Bewegung der Haken 132 bis zu einer gewissen Grenze erlauben, die zum Hintergreifen der Verschlussflächen 134 notwendig ist.

Sowohl Figur 8E als auch Figur 8F zeigen, dass der zweite Gegenverriegelungsabschnitt 118 in diesem Fall vier Ausnehmungen 138 umfasst, welche einen im Wesentlichen entlang der Längsachse L verlaufenden Einbringbereich 140 und einen hiervon ausgehenden und sich im Wesentlichen in Umfangsrichtung erstreckenden Verriegelungsbereich 142 bilden. Der Einbringbereich 140 ist in etwa entlang der Längsachse L fluchtend zu den Auswölbungen 136 angeordnet.

Figur 8F zeigt ferner, dass der zweite Verriegelungsabschnitt 110 des zweiten Verbindungskörpers 100 mit vier zweiten Verriegelungsfortsätzen 144 versehen ist, welche in die vier Ausnehmungen 138 einbringbar sind. Die Verbindung zwischen dem zweiten Verbindungskörper 100 und dem Verriegelungskörper 102 kann folglich mittels einer entlang der Längsachse L gerichteten translatorischen Relativbewegung, gefolgt von einer rotatorischen Relativbewegung um die Längsachse L hergestellt werden.

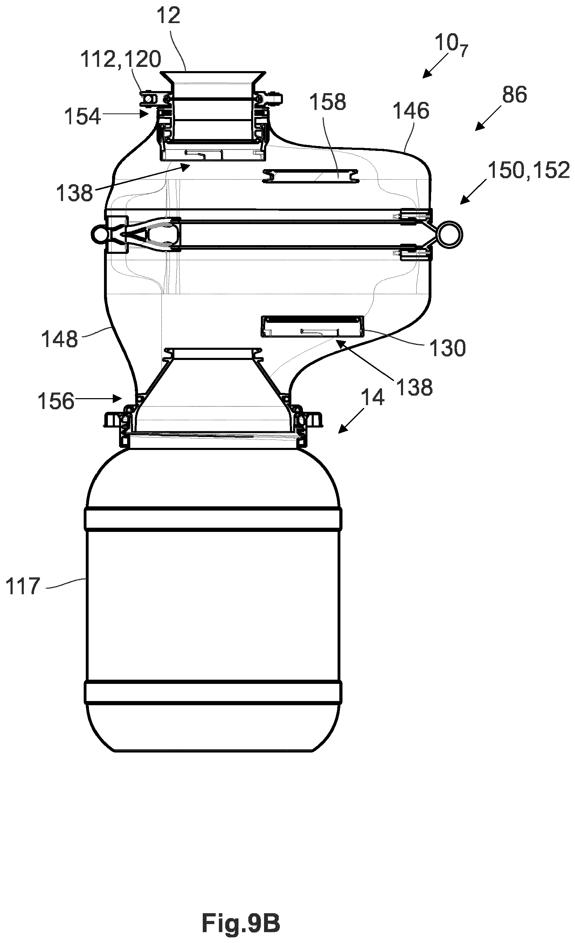

Wie insbesondere aus der Figur 9B hervorgeht, weist der Deckel 130 ebenfalls die Ausnehmungen 138 wie der zweite Gegenverriegelungsabschnitt 118 auf, so dass der Deckel 130 auf dieselbe Weise mit dem zweiten Verbindungskörper 100 verbunden werden kann wie der Verriegelungskörper 102.

Der zweite Verriegelungsabschnitt 110 und der erste Verbindungskörper 98 umfassen Triclamp-Stutzen 119 (siehe insbesondere Figuren 8B, 8C und 8E), die eine Aufnahme für eine Dichtung 122 aufweisen, um die Verbindung zwischen dem zweiten Verbindungskörper 100 und dem Verriegelungskörper 102 abzudichten. Die Dichtung 122 ist identisch zu derjenigen, die zum Abdichten der Verbindung zwischen dem ersten Leitungsende 12 und dem ersten Verbindungskörper 98 verwendet wird. Auch die Triclamp-Stutzen 119 sind identisch.

Zum Verbinden des ersten Leitungsendes 12 mit dem Behälter 117, der das zweite Leitungsende 14 bildet, wird wie folgt vorgegangen: Zunächst wird eine hier nicht dargestellte Abdeckung des Behälters 117 - sofern überhaupt vorhanden - vom Behälter 117 abgeschraubt und der zweite Verbindungskörper 100 unter Verwendung des zweiten Adapters 127 mit dem Behälter 117 verschraubt. Der zweite Verbindungskörper 100 kann dabei am zweiten Verriegelungsabschnitt 110 mit dem Deckel 130 verschlossen sein (siehe beispielsweise Figur 8C und 8D).

Das erste Leitungsende 12 wird unter Verwendung der Triclamp-Klammer 120 mit dem ersten Verbindungskörper 98 verbunden, wie in Figur 8E dargestellt.

Anschließend wird der Verriegelungskörper 102 mittels einer entlang der Längsachse L gerichteten Relativbewegung mit dem ersten Verbindungskörper 98 verbunden, so dass der in Figur 8E dargestellte Zustand vorliegt. Nun wird der Deckel 130 vom zweiten Verriegelungsabschnitt 110 des zweiten Verbindungskörpers 100 entfernt und der zweite Verbindungskörper 100 und der Verriegelungskörper 102 mit einer translatorischen Bewegung aufeinander zu bewegt, so dass die zweiten Verriegelungsfortsätze 144 in den Einbringbereich 140 der Ausnehmungen 138 eingreifen. Anschließend wird eine relative Drehbewegung um die Längsachse L durchgeführt, wodurch die zweiten Verriegelungsfortsätze 144 in den Verriegelungsbereich 142 der Ausnehmungen 138 hinein bewegt werden. Nun sind das erste Leitungsende 12 und das zweite Leitungsende 14 miteinander verbunden, wie in Figur 8B dargestellt.

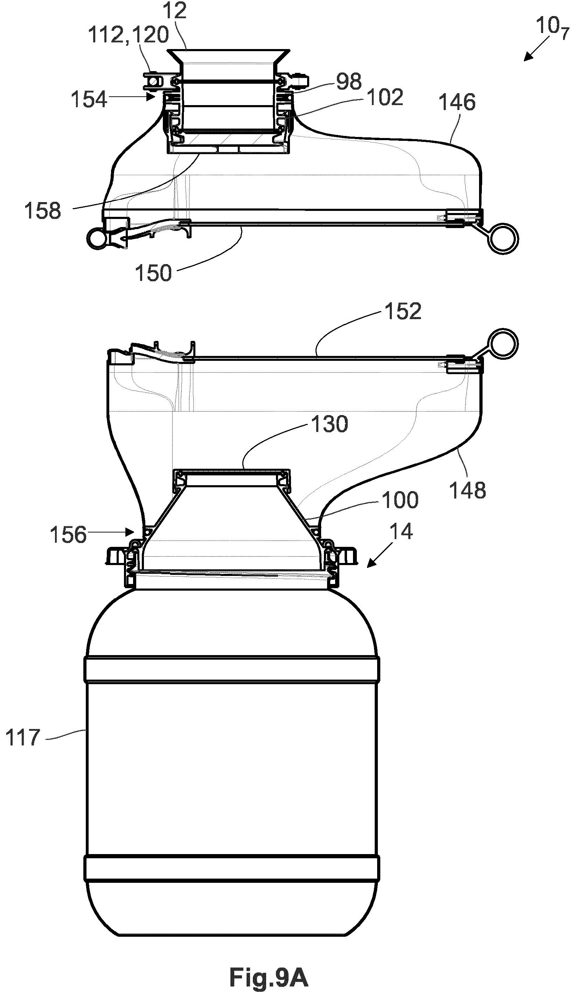

Die Figuren 9A und 9B zeigen ein siebtes Ausführungsbeispiel der erfindungsgemäßen Verbindungsvorrichtung 10₇, welche weitgehend identisch zu der Verbindungsvorrichtung 10₆ nach dem sechsten Ausführungsbeispiel aufgebaut ist. Allerdings ist am ersten Verbindungskörper 98 eine erste schlauchförmige Schutzhülle 146 und am zweiten Verbindungskörper 100 eine zweite schlauchförmige Schutzhülle 148 befestigt. Hierzu sind der erste Verbindungskörper 98 mit einem ersten Aufnahmeabschnitt 154 (siehe insbesondere Figur 8E) und der zweite Verbindungskörper 100 mit einem zweiten Aufnahmeabschnitt 156 (siehe insbesondere Figur 8C) ausgestattet. Die erste schlauchförmige Schutzhülle 148 weist eine erste Verschlusseinheit 150 und die zweite schlauchförmige Schutzhülle 148 eine zweite Verschlusseinheit 152 auf, welche zum Ausbilden einer Sekundärschnittstelle 86 miteinander verbunden werden können. Die erste Verschlusseinheit 150 und die zweite Verschlusseinheit 152 können so ausgebildet sein, wie in der WO 2019/175121 A1 beschrieben.

Im Zustand, der in Figur 9A gezeigt ist, ist der erste Verbindungskörper 98 mit dem ersten Leitungsende 12 auf die für das sechste Ausführungsbeispiel der Verbindungsvorrichtung 10₆ beschriebene Weise miteinander verbunden. Wiederum ist nicht dargestellt, dass das erste Leitungsende 12 mit einem Prozessraum, beispielsweise eines Reaktors, verbunden ist.

Zudem ist der Verriegelungskörper 102 auf die beschriebene Weise mit dem ersten Verbindungskörper 98 verbunden. Im zweiten Gegenverriegelungsabschnitt 118 ist der Verriegelungskörper 102 mit einem Verschluss 158 verschlossen, der ebenfalls die hier nicht erkennbaren Verriegelungsfortsätze 144 aufweist, so dass dieser in die Ausnehmungen 138 des zweiten Verriegelungsabschnitt 110 eingreifen kann, wie für den zweiten Verbindungskörper 100 beschrieben.

Der zweite Verbindungskörper 100 ist mit dem bereits erwähnten Deckel 130 auf die beschriebene Weise verschlossen.

Die erste Verschlusseinheit 150 verschließt die erste schlauchförmige Schutzhülle 146, so dass der Verriegelungskörper 102 zum einen mit dem Verschluss 158 und zum anderen mit der ersten schlauchförmigen Schutzhülle 146 verschlossen ist.

Der zweite Verbindungskörper 100 ist mit dem bereits erwähnten Deckel 130 auf die beschriebene Weise verschlossen. Weiterhin ist der zweite Verbindungskörper 100 mit der von der zweiten Verschlusseinheit 152 verschlossenen zweiten schlauchförmigen Schutzhülle 148 verbunden.

In Figur 9B sind die erste Verschlusseinheit 150 und die zweite Verschlusseinheit 152 miteinander verbunden. Kurz gesagt können mit einer hier nicht gesondert gezeigten Schiebereinheit, die von einem Ende zum anderen Ende ähnlich wie ein Zipp- oder Reißverschluss einerseits die erste Verschlusseinheit 150 und die zweite Verschlusseinheit 152 miteinander verbunden, andererseits gleichzeitig die erste schlauchförmige Schutzhülle 146 und die zweite schlauchförmige Schutzhülle 148 geöffnet werden, so dass ein Durchtrittskanal zwischen der ersten schlauchförmigen Schutzhülle 146 und der zweiten schlauchförmigen Schutzhülle 148 geschaffen wird. Von außen kann ein Benutzer den Verschluss vom Verriegelungskörper 102 und den Deckel 130 vom zweiten Verbindungskörper 100 entfernen, wobei die erste schlauchförmige Schutzhülle 146 und die zweite schlauchförmige Schutzhülle 148 entsprechend verformt werden, was unschädlich ist. Der Verschluss 158 und der Deckel 130 verbleiben dabei innerhalb des von der ersten schlauchförmigen Schutzhülle 146 und der zweiten schlauchförmigen Schutzhülle 148 umschlossenen Raums. Anschließend können der Verriegelungskörper 102 und der zweite Verbindungskörper 100 auf die für das sechste Ausführungsbeispiel der Verbindungsvorrichtung 10₆ beschriebene Weise miteinander verbunden werden, so dass der in Figur 8B dargestellte Zustand hergestellt wird, in welchem das erste Leitungsende 12 und das zweite Leitungsende 14 miteinander verbunden sind, wobei jedoch die Verbindungsvorrichtung 10₆ von der ersten schlauchförmigen Schutzhülle 149 und der zweiten schlauchförmigen Schutzhülle 148 umschlossen wird. Hierdurch wird eine Sekundärschnittstelle 86 geschaffen, welche insbesondere dann eingesetzt wird, wenn vermieden werden muss, dass selbst kleinste Menge einer Substanz in die Umwelt gelangen dürfen.

Zum Trennen des ersten Leitungsendes 12 vom zweiten Leitungsende 14 wird in der umgekehrten Reihenfolge verfahren.

### Bezugszeichenliste

- 10: Verbindungsvorrichtung
- 10₁ - 10₈: Verbindungsvorrichtung
- 12: erstes Leitungsende
- 14: zweites Leitungsende
- 16: erste Erweiterung
- 18: erste Stirnfläche
- 20: erste Rückfläche
- 22: zweite Erweiterung
- 24: zweite Stirnfläche
- 26: zweite Rückfläche
- 28: erste Schrägfläche
- 30: zweite Schrägfläche
- 32: Dichtelement
- 34: Auflagering
- 36: Aufnahmeöffnung
- 38: Sperreinrichtung
- 40: Griffstück
- 42: Sperrkörper
- 44: erster Ring
- 46: zweiter Ring
- 48: Rastverbindung
- 50: Rastmittel
- 52: Verdrehsicherung
- 54: Sperrstift
- 56: Sacklochbohrung
- 57: Bohrung
- 58: Kragen
- 60: erstes Vorspannmittel
- 62: zweites Vorspannmittel
- 63: Sperrkugel
- 64: Nut
- 65: Feder
- 66: Stellfläche
- 67: Ringsegment
- 68: Handrad
- 69: Stoppelement
- 70: Antriebseinheit
- 71: Sperr-Nutstein
- 72: Kolben-Zylindereinheit
- 73: Stellring
- 74: Verbindungsring
- 75: nach innen gerichtete Abschnittsflächen
- 76: erste Verschlussfläche
- 77: nach außen gerichtete Abschnittsflächen
- 78: zweite Verschlussfläche
- 80: Durchtrittsabschnitt
- 82: Kabelbinder
- 84: Unterbrechungsabschnitten
- 86: Sekundärschnittstelle
- 88: flexible Umhüllung
- 90: Umhüllung
- 92: Schutzhülle
- 94: erster Verbindungsabschnitt
- 96: zweiter Verbindungsabschnitt
- 98: erster Verbindungskörper
- 100: zweiter Verbindungskörper
- 102: Verriegelungskörper
- 104: erster Gegenverbindungsabschnitt
- 106: erster Verriegelungsabschnitt
- 108: zweiter Gegenverbindungsabschnitt
- 110: zweiter Verriegelungsabschnitt
- 112: erstes Verbindungsmittel
- 114: zweites Verbindungsmittel
- 116: erster Gegenverriegelungsabschnitt
- 117: Behälter
- 118: zweiter Gegenverriegelungsabschnitt
- 119: Triclamp-Stutzen
- 120: Triclamp-Klammer
- 122: Dichtung
- 124: Schraubaußengewinde
- 126: Schraubinnengewinde
- 127: zweiter Adapter
- 128: Anlagefläche
- 130: Deckel
- 132: Haken
- 134: Verschlussflächen
- 136: Auswölbung
- 138: Ausnehmung
- 140: Einbringbereich
- 142: Verriegelungsbereich
- 144: Verriegelungsfortsatz
- 146: erste schlauchförmige Schutzhülle
- 148: zweite schlauchförmige Schutzhülle
- 150: erste Verschlusseinheit
- 152: zweite Verschlusseinheit
- 154: erster Aufnahmeabschnitt
- 156: zweiter Aufnahmeabschnitt
- 158: Verschluss

- A - F: Ausschnitt
- DS: Drehachse Sperrkörper
- DR: Drehachse zweiter Ring, Stellring
- L: Längsachse

## Patentansprüche

1. Verbindungsvorrichtung (10) zum Verbinden eines ersten Leitungsendes (12) mit einem zweiten Leitungsende (14), wobei
- das erste Leitungsende (12) einen ersten Verbindungsabschnitt (94) aufweist und
- das zweite Leitungsende (14) einen zweiten Verbindungsabschnitt (96) aufweist, und die Verbindungsvorrichtung (10) umfasst:
- einen ersten Verbindungskörper (98) mit
o einem ersten Gegenverbindungsabschnitt (104), wobei der erste Verbindungskörper (98) unter Verwendung des ersten Verbindungsabschnitts (94) und des ersten Gegenverbindungsabschnitts (104) mit dem ersten Leitungsende (12) verbindbar oder verbunden ist, und
o einem ersten Verriegelungsabschnitt (106),
- einen zweiten Verbindungskörper (100) mit
o einem zweiten Gegenverbindungsabschnitt (108), wobei der zweite Verbindungskörper (100) unter Verwendung des zweiten Verbindungsabschnitts (96) und des zweiten Gegenverbindungsabschnitts (108) mit dem zweiten Leitungsende (14) verbindbar oder verbunden ist, und
o einem zweiten Verriegelungsabschnitt (110),
- einen Verriegelungskörper (102), der
o eine Längsachse (L) definiert und mit
o einem ersten Gegenverriegelungsabschnitt, mit welchem der Verriegelungskörper (102) unter Verwendung des ersten Verriegelungsabschnitts (106) mit dem ersten Verbindungskörper (98) mittels einer translatorischen Bewegung entlang der Längsachse (L) und/oder einer rotatorischen Bewegung um die Längsachse (L) verbindbar ist, und mit
o einem zweiten Gegenverriegelungsabschnitt, mit welchem der Verriegelungskörper (102) unter Verwendung des zweiten Verriegelungsabschnitts (110) mit dem zweiten Verbindungskörper (100) mittels einer translatorischen Relativbewegung entlang der Längsachse (L) und/oder einer rotatorischen Relativbewegung um die Längsachse (L) verbindbar ist, wobei
- die Verbindung zwischen
o dem Verriegelungskörper (102) und dem ersten Verbindungskörper (98), und/oder
o dem Verriegelungskörper (102) und dem zweiten Verbindungskörper (100) lösbar ist,
**dadurch gekennzeichnet, dass**
- der erste Verbindungsabschnitt (94) und der erste Gegenverbindungsabschnitt (104) als Triclamp-Stutzen (119) und/oder
- der zweite Verbindungsabschnitt (96) und der zweite Gegenverbindungsabschnitt (108) als Triclamp-Stutzen (119) ausgeführt sind.

2. Verbindungsvorrichtung (10) nach Anspruch 1,
**dadurch gekennzeichnet, dass**
- der erste Gegenverriegelungsabschnitt (116) radial zur Längsachse (L) bewegbare Haken (132) und
- der erste Verriegelungsabschnitt (106) erste Verschlussflächen (134) oder umgekehrt aufweisen, wobei
- aufgrund einer translatorischen Relativbewegung entlang der Längsachse (L) die Haken (132) zunächst im ersten Verriegelungsabschnitt (106) radial zur Längsachse (L) nach außen bewegt werden und anschließend die ersten Verschlussflächen (134) hintergreifen.

3. Verbindungsvorrichtung (10) nach Anspruch 2,
**dadurch gekennzeichnet, dass** der Verriegelungskörper (102) radial zur Längsachse (L) nach außen vorspringende Auswölbungen (136) aufweist und die Haken (132) von den Auswölbungen (136) umschlossen werden.

4. Verbindungsvorrichtung (10) nach einem der vorherigen Ansprüche,
**dadurch gekennzeichnet, dass**
- der zweite Gegenverriegelungsabschnitt (118) Ausnehmungen (138) mit einem Einbringbereich (140) und einem Verriegelungsbereich (142) und
- der zweite Verriegelungsabschnitt (110) zweite Verriegelungsfortsätze (144) oder umgekehrt aufweisen, wobei
- aufgrund einer translatorischen Relativbewegung entlang der Längsachse (L) die Verriegelungsfortsätze (144) zunächst in den Einbringbereich (140) und anschließend aufgrund einer rotatorischen Relativbewegung um die Längsachse (L) in den Verriegelungsbereich (142) einbringbar sind.

5. Verbindungsvorrichtung (10) nach einem der vorherigen Ansprüche,
**dadurch gekennzeichnet, dass** der erste Verbindungskörper (98) und/oder der zweite Verbindungskörper (100) trichterförmig ausgebildet sind.

6. Verbindungsvorrichtung (10) nach einem der vorherigen Ansprüche,
**dadurch gekennzeichnet, dass**
- am ersten Gegenverbindungsabschnitt (104) ein erster Adapter zum Ausbilden der Verbindung mit dem ersten Verbindungsabschnitt (94) anschließbar ist und/oder
- am zweiten Gegenverbindungsabschnitt (108) ein zweiter Adapter (127) zum Ausbilden einer Verbindung mit dem zweiten Verbindungsabschnitt (96) anschließbar ist.

7. Verbindungsvorrichtung (10) nach einem der vorherigen Ansprüche,
**dadurch gekennzeichnet, dass**
- der erste Verbindungskörper (98) einen ersten Aufnahmeabschnitt (154) zum Aufnehmen einer ersten schlauchförmigen Schutzhülle (146) aufweist und
- der zweite erste Verbindungskörper (98) einen zweiten Aufnahmeabschnitt (156) zum Aufnehmen einer zweiten schlauchförmigen Schutzhülle (148) aufweist.
